# EUROPEAN PATENT APPLICATION

(11) **EP 4 797 593 A1**
(43) Date of publication of application: **26.08.2026**
(21) Application number: 24890518.4
(22) Date of filing: 04.11.2024
(51) Int. Cl.: H04L 1/1812, H04L 1/1829, H04L 1/1867, H04L 1/1607, H04B 7/185, H04L 5/00

(54) **COMMUNICATION METHOD AND RELATED DEVICE**

(30) Priority: 17.11.2023 CN 202311554262
(71) Applicant: HUAWEI TECHNOLOGIES CO., LTD., Shenzhen 518129 (CN)
(72) Inventor: WANG, Xiaolu, Shenzhen, Guangdong 518129 (CN); LUO, Hejia, Shenzhen, Guangdong 518129 (CN); WANG, Jun, Shenzhen, Guangdong 518129 (CN)
(74) Representative: Maiwald GmbH
(86) International application number: PCT/CN2024/129563
(87) International publication number: WO 2025/103161

(57) **Abstract**

A communication method and a related device are provided. This enables a network device to retransmit, based on first information sent by a terminal device, either some or all of M first TBs that are received incorrectly, thereby achieving data recovery. Additionally, the terminal device can fully use its buffered resource to restore the data, thereby improving the success rate and reliability of retransmission and decoding, ultimately enhancing communication efficiency. In the method, first data received by the terminal device includes N first TBs, where N is greater than 1. The first information sent by the terminal device indicates that M out of the N first TBs are received incorrectly. Subsequently, the terminal device can perform soft combining decoding on K first TBs based on K second TBs included in second data within the same process.

## Description

This application claims priority to Chinese Patent Application No. 202311554262.8, filed with the China National Intellectual Property Administration on November 17, 2023 and entitled "COMMUNICATION METHOD AND RELATED DEVICE", which is incorporated herein by reference in its entirety.

### TECHNICAL FIELD

This application relates to the communication field, and in particular, to a communication method and a related device.

### BACKGROUND

Wireless communication involves data transmission between two or more communication nodes without propagation using conductors or cables. These communication nodes typically include network devices and terminal devices. During a communication process, when a receiver fails to receive correct information, it is referred to as a bit error (or a reception error, a parsing error, or the like). Generally, upon detecting a bit error, the receiver can request the sender to retransmit the erroneous data.

For example, when the sender is a network device and the receiver is a terminal device, the data sent by the network device is a transport block (transport block, TB). If the terminal device detects a bit error in the received data, the terminal device may feed back a negative acknowledgement (negative acknowledgement, NACK) via a hybrid automatic repeat request (hybrid automatic repeat request, HARQ). Correspondingly, the network device may determine, based on the NACK, to retransmit the TB.

However, the data sent by the network device may include two or more TBs. In this case, if a bit error occurs, how to implement data retransmission is an urgent technical problem to be resolved.

### SUMMARY

This application provides a communication method and a related device, enabling a network device to retransmit, based on first information sent by a terminal device, either some or all of M first TBs that are received incorrectly, thereby achieving data recovery. Additionally, the terminal device can fully use its buffered resource to restore the data, thereby improving the success rate and reliability of retransmission and decoding, ultimately enhancing communication efficiency.

A first aspect of this application provides a communication method. The method is performed by a terminal device (or a terminal). Alternatively, the method is performed by a part of components (for example, a processor, a chip, or a chip system) in a terminal device. Alternatively, the method may be implemented by a logical module or software that can implement all or a part of functions of a terminal device. In the first aspect and possible implementations thereof, an example in which the method is performed by the terminal device is used for description. In the method, the terminal device receives first data in a first process, where the first data includes N first TBs, and N is an integer greater than 1; the terminal device sends first information, where the first information indicates that M first TBs are received incorrectly, the M first TBs are included in the N first TBs, and M is a positive integer less than or equal to N; the terminal device receives second data in the first process, where the second data includes K second TBs, and the K second TBs are retransmissions of K first TBs in the M first TBs, where K is less than or equal to M; and the terminal device performs soft combining decoding based on the K first TBs and the K second TBs.

According to the foregoing technical solution, the first data received by the terminal device includes the N first TBs, and N is greater than 1. Then, the first information sent by the terminal device indicates that the M first TBs in the N first TBs are received incorrectly. Subsequently, the terminal device may perform soft combining decoding on the K first TBs based on the K second TBs included in the second data in the same process. In other words, when a quantity of first TBs included in data sent by a network device is greater than 1, the terminal device may indicate, by using the first information, that the M first TBs in the N first TBs are received incorrectly. Subsequently, the network device may retransmit a part or all of TBs in the M first TBs. Therefore, the network device can retransmit, based on the first information sent by the terminal device, the part or all of TBs in the M first TBs that are received incorrectly, to restore the data.

In addition, the K second TBs included in the second data received by the terminal device are the retransmissions of the K first TBs in the M first TBs that are received incorrectly. The terminal device performs soft combining decoding based on the K first TBs that are received incorrectly and buffered and the K second TBs that are retransmitted. Therefore, the terminal device can fully use a buffered resource to restore the data, thereby improving a success rate and reliability of retransmitting and decoding, and further improving communication efficiency.

It should be noted that, in a process of communication between the network device and the terminal device, the network device may configure one or more processes (processes) for data of the communication between the two devices, and perform data transmission by using the one or more processes. In this application, a process may be replaced with a thread.

It should be understood that, in the one or more processes, the network device may send one or more TBs to the terminal device in any process. For the any process, one or more TBs in the process may be referred to as data (for example, the first data, the second data, or third data mentioned below). Alternatively, one or more TBs in the process may be referred to as a TB group, a TB set, or the like. In other words, data in this application may be replaced with a TB group, a TB set, or the like. For example, the first data may be replaced with a first TB group (or a first TB set), the second data may be replaced with a second TB group (or a second TB set), and the third data may be replaced with a third TB group (or a third TB set).

In this application, a receiving error may be understood as another term like a decoding error, a parsing error, unsuccessful decoding, unsuccessful parsing, or unsuccessful receiving. Correspondingly, the receiving error may also be replaced with the another term.

In this application, soft combining decoding may be understood as combining decoding performed based on buffered soft information and retransmitted information. Correspondingly, soft combining decoding may be replaced with other terms such as soft combining processing and retransmission soft combining.

Optionally, the K first TBs are K TBs with a smaller index value in one or more TBs that are received incorrectly and that are in the M first TBs; the K first TBs are K TBs with a larger index value in one or more TBs that are received incorrectly and that are in the M first TBs; or indexes of the K first TBs in the M first TBs are preconfigured or dynamically configured.

Optionally, the first data in the first process may be initially transmitted data, or may be retransmitted data. This is not limited herein.

In a possible implementation of the first aspect, the method further includes: The terminal device receives second information, where the second information indicates that a quantity of TBs on which the terminal device performs soft combining processing in the first process is P, and K is less than or equal to P.

According to the foregoing technical solution, the terminal device may further receive the second information, so that the terminal device can determine, based on the second information, the quantity of TBs on which soft combining processing is performed in the first process. Subsequently, the terminal device may perform soft combining decoding on retransmitted data based on the quantity P indicated in the second information.

In addition, the second information performs indication, so that when a quantity of processes between the network device and the terminal device is greater than 1, the network device can indicate, for different processes, corresponding quantities of TBs on which soft combining processing is performed, thereby improving implementation flexibility.

In a possible implementation of the first aspect, before the terminal device receives the second information, the method further includes: The terminal device sends third information, where the third information indicates a quantity of TBs supported by the terminal device for soft combining processing in the first process.

Optionally, the third information may indicate one or more quantities of TBs, supported by the terminal device for soft combining processing in the first process.

Further, optionally, each of the one or more quantities of TBs are greater than or equal to P.

Further, optionally, one of the one or more quantities of TBs is P.

According to the foregoing technical solution, before the terminal device receives the second information, the terminal device may further send, to the network device, the third information indicating the quantity of TBs supported by the terminal device for soft combining processing in the first process. This allows the network device to send the second information to the terminal device based on a capability indicated in the third information, ensuring that the value P indicated in the second information by the network device is adapted to the capability of the terminal device.

In a possible implementation of the first aspect, the method further includes: The terminal device receives fourth information, where the fourth information indicates that quantities of TBs on which the terminal device performs soft combining processing in at least two processes are all P, and the at least two processes include the first process.

According to the foregoing technical solution, the terminal device may further receive the fourth information, so that the terminal device can determine, based on the fourth information, the quantities of TBs on which soft combining processing is performed in the at least two processes, where the at least two processes include the first process. Subsequently, the terminal device may perform soft combining decoding on retransmitted data in the at least two processes based on the quantity P indicated in the second information.

In addition, the fourth information performs indication, so that when a quantity of processes between the network device and the terminal device is greater than 1, the network device can indicate, by using the fourth information, the same quantity of TBs on which soft combining processing is performed, thereby reducing overhead.

Optionally, in addition to the first process, the at least two processes may further include another process, for example, a second process or a third process.

In a possible implementation of the first aspect, before the terminal device receives second information, the method further includes: The terminal device sends fifth information, where the fifth information indicates quantities TBs supported by the terminal device for soft combining processing in the at least two processes.

According to the foregoing technical solution, before the terminal device receives the fourth information, the terminal device may further send, to the network device, the fifth information indicating the quantity of TBs supported by the terminal device for soft combining processing in the at least two processes. This enables the network device to send the fourth information to the terminal device based on a capability indicated in the fifth information, ensuring that the value P indicated in the fourth information by the network device is adapted to the capability of the terminal device.

In a possible implementation of the first aspect, when M is less than or equal to P, K is equal to M.

According to the foregoing technical solution, after the terminal device receives the N first TBs in the first process, when the quantity M of TBs that are received incorrectly is less than or equal to the quantity P of TBs on which the terminal device performs soft combining, the quantity K of retransmitted TBs included in the second data received by the terminal device is equal to the quantity M of TBs received incorrectly, as indicated in the first information by the terminal device. In other words, the M first TBs received incorrectly, as indicated in the first information by the terminal device, can all be retransmitted and decoded in a soft combining decoding manner.

In a possible implementation of the first aspect, when M is greater than P, K is equal to P and K is less than M.

According to the foregoing technical solution, after the terminal device receives the N first TBs in the first process, when the quantity of TBs that are received incorrectly is greater than the quantity P of TBs on which the terminal device performs soft combining, the quantity K of retransmitted TBs included in the second data received by the terminal device is less than the quantity M of TBs received incorrectly, as indicated in the first information by the terminal device. In other words, P (or K, because K is equal to P herein) first TBs in the M first TBs received incorrectly, as indicated in the first information by the terminal device, can be retransmitted and decoded in a soft combining decoding manner.

In a possible implementation of the first aspect, the second data further includes M-K third TBs, and the M-K third TBs are retransmissions of M-K first TBs other than the K first TBs in the M first TBs.

According to the foregoing technical solution, when the quantity K of retransmitted TBs included in the second data received by the terminal device is less than the quantity M of TBs received incorrectly, as indicated in the first information by the terminal device, the M-K first TBs other than the K first TBs in the M first TBs may not be retransmitted and decoded in a soft combining decoding manner. Therefore, the terminal device may further receive the M-K third TBs from the second data in the first process, where the M-K third TBs are the retransmissions of the M-K first TBs other than the K first TBs in the M first TBs, so that the terminal device can restore data based on the M-K third TBs.

It should be understood that, because the quantity of TBs on which the terminal device performs soft combining processing in the first process is P, when the quantity K of retransmitted TBs included in the second data received by the terminal device is less than the quantity M of TBs received incorrectly, as indicated in the first information by the terminal device, the terminal device may decode the M-K third TBs in a manner other than the soft combining decoding manner. For example, the terminal device may decode the M-K third TBs in a manner of decoding newly transmitted data.

In a possible implementation of the first aspect, the method further includes: The terminal device receives third data, where the third data includes M-K third TBs, and the M-K third TBs are retransmissions of M-K first TBs.

According to the foregoing technical solution, when the quantity K of retransmitted TBs included in the second data received by the terminal device is less than the quantity M of TBs received incorrectly, as indicated in the first information by the terminal device, the M-K first TBs other than the K first TBs in the M first TBs may not be retransmitted and decoded in a soft combining decoding manner. Therefore, the terminal device may alternatively receive the M-K third TBs from the third data different from the second data, where the M-K third TBs are the retransmissions of the M-K first TBs other than the K first TBs in the M first TBs, so that the terminal device can restore data based on the M-K third TBs.

Optionally, the third data is data different from the second data, and the third data may be transmitted in the first process, or may be transmitted in another process. This is not limited herein.

In a possible implementation of the first aspect, the method further includes: The terminal device discards decoding soft information of the M-K first TBs other than the K first TBs in the M first TBs.

According to the foregoing technical solution, when the quantity K of retransmitted TBs included in the second data received by the terminal device is less than the quantity M of TBs received incorrectly, as indicated in the first information by the terminal device, the M-K first TBs other than the K first TBs in the M first TBs may not be retransmitted and decoded in a soft combining decoding manner. Therefore, the terminal device may discard (or confirm to discard) the decoding soft information of the M-K first TBs other than the K first TBs in the M first TBs, so that consumption of buffer space of the terminal device can be reduced, and power consumption overhead of the terminal device can be reduced.

In a possible implementation of the first aspect, the second data further includes Q fourth TBs, the Q fourth TBs are different from the K second TBs, and Q is a positive integer.

According to the foregoing technical solution, in addition to the retransmissions of the K first TBs (namely, the K second TBs), the second data may further include the Q fourth TBs different from the second TBs. In this way, when the network device can carry the retransmitted K second TBs in the second data in the first process, the network device can further carry another newly transmitted TB in the second data, so that data transmission in the first process can be fully utilized, and a transmission delay can be reduced.

In a possible implementation of the first aspect, the first information includes any one of the following:
N bits, where the N bits respectively indicate whether the N first TBs are received successfully or incorrectly;
indexes of the M first TBs; and
indexes of the K first TBs and a value M-K.

According to the foregoing technical solution, the first information may be implemented by using any one of the foregoing items, so that the network device can determine, based on any one of the foregoing items, that the M first TBs are received incorrectly, thereby improving implementation flexibility.

In a possible implementation of the first aspect, before the terminal device receives the first data, the method further includes: The terminal device receives indication information indicating a redundancy version of the first data; and before receiving the second data, the method further includes: The terminal device receives indication information indicating a redundancy version of the second data.

According to the foregoing technical solution, for data (for example, the first data or the second data) transmitted in a process, the network device may send indication information indicating a redundancy version of the data, so that the terminal device can determine a redundancy version of each data based on the indication information, and determine a data decoding manner based on the redundancy version of each data.

For example, because the K second TBs in the second data are the retransmissions of the K first TBs in the first data, the indication information may indicate that the redundancy version of the first data is different from the redundancy version of the second data, so that the terminal device can determine, based on the different redundancy versions, to perform soft combining decoding on the K second TBs in the second data.

In a possible implementation of the first aspect, before receiving the first data, the method further includes: The terminal device receives indication information indicating redundancy versions corresponding to the N first TBs; and before receiving the second data, the method further includes: The terminal device receives indication information indicating redundancy versions corresponding to the K second TBs, where redundancy versions corresponding to the K first TBs in the N first TBs are different from or the same as the redundancy versions corresponding to the K second TBs.

According to the foregoing technical solution, for one or more TBs (for example, the N first TBs in the first data or the K second TBs in the second data) included in data transmitted in a process, the network device may send indication information indicating redundancy versions of the one or more TBs, so that the terminal device can determine a redundancy version of each TB based on the indication information, and determine a data decoding manner based on the redundancy version of each TB.

For example, because the K second TBs in the second data are the retransmissions of the K first TBs in the first data, the indication information may indicate the redundancy versions of the K second TBs that are in the second data and that correspond to the K first TBs in the first data, so that the terminal device can determine, based on the redundancy versions, to perform soft combining decoding on the K second TBs in the second data.

In a possible implementation of the first aspect, the method further includes: The terminal device receives indication information indicating that the K second TBs in the second data are used for soft combining decoding.

According to the foregoing technical solution, the terminal device may further receive the indication information indicating that the K second TBs in the second data are used for soft combining decoding, so that after receiving the second data, the terminal device can determine, based on the indication information, to perform soft combining decoding on the K second TBs in the second data.

In a possible implementation of the first aspect, the method further includes: The terminal device receives indication information indicating that a quantity of retransmitted TBs that are used for soft combining decoding and that are included in the second data is K.

According to the foregoing technical solution, the terminal device may further receive the indication information indicating that the quantity of retransmitted TBs that are used for soft combining decoding and that are included in the second data is K, so that after receiving the second data, the terminal device can determine, based on the indication information, the quantity of TBs that are used for soft combining decoding and that are in the second data.

In a possible implementation of the first aspect, the method further includes: The terminal device receives sixth information, where the sixth information indicates that a quantity of TBs in the first process is N.

According to the foregoing technical solution, the terminal device may further receive the sixth information, so that the terminal device can determine, based on the sixth information, the quantity of TBs transmitted in the first process. Subsequently, the terminal device may receive data in the first process based on the quantity N indicated in the sixth information.

In addition, the sixth information performs indication, so that when a quantity of processes between the network device and the terminal device is greater than 1, the network device can separately indicate, for different processes, corresponding quantities of transmitted TBs, thereby improving implementation flexibility.

In a possible implementation of the first aspect, the method further includes: The terminal device receives seventh information, where the seventh information indicates that quantities of TBs in at least two processes are all N, and the at least two processes include the first process.

According to the foregoing technical solution, the terminal device may further receive the seventh information, so that the terminal device can determine, based on the seventh information, the quantities of TBs transmitted in the at least two processes, where the at least two processes include the first process. Subsequently, the terminal device may receive data in the at least two processes based on the quantity N indicated in the seventh information.

In addition, the seventh information performs indication, so that when a quantity of processes between the network device and the terminal device is greater than 1, the network device can indicate the same quantity of transmitted TBs by using the seventh information, thereby reducing overhead.

In a possible implementation of the first aspect, the first information is carried on a physical uplink control channel (physical uplink control uplink channel, PUCCH), and a time domain position (for example, a slot position) X of the PUCCH satisfies: $X = n + k + {K}_{offset} ∗ {2}^{u - {u}_{{K}_{offset}}} ,$ where
n represents a slot index of a PUCCH slot that overlaps a slot in which a last TB in time domain in the N first TBs is located, k represents a scheduling timing parameter indicated by physical downlink shared channel to hybrid automatic repeat request feedback (physical downlink shared uplink channel to hybrid automatic repeat request feedback, PDSCH-to-HARQ_feedback) signaling, K_{offset} represents a scheduling offset, µ is a subcarrier spacing for PUCCH transmission, and u_{K_{offset}} is a subcarrier spacing configuration of K_{offset}.

According to the foregoing technical solution, a transmission resource for the first information sent by the terminal device may be determined in the foregoing manner, so that the network device can receive the first information on the PUCCH in the foregoing manner.

A second aspect of this application provides a communication method. The method is performed by a network device. Alternatively, the method is performed by a part of components (for example, a processor, a chip, or a chip system) in a network device. Alternatively, the method may be implemented by a logical module or software that can implement all or a part of functions of a network device. In the second aspect and possible implementations thereof, an example in which the method is performed by the network device is used for description. In the method, the network device sends first data in a first process, where the first data includes N first transport blocks TBs, and N is an integer greater than 1; the network device receives first information, where the first information indicates that M first TBs are received incorrectly, the M first TBs are included in the N first TBs, and M is a positive integer less than or equal to N; and the network device sends second data in the first process, where the second data includes K second TBs, and the K second TBs are retransmissions of K first TBs in the M first TBs, where K is less than or equal to M. The K first TBs and the K second TBs are used for soft combining decoding.

According to the foregoing technical solution, the first data sent by the network device includes the N first TBs, and N is greater than 1. Then, the first information received by the network device indicates that the M first TBs in the N first TBs are received incorrectly. Subsequently, a terminal device may perform soft combining decoding on the K first TBs based on the K second TBs included in the second data in the same process. In other words, when a quantity of first TBs included in data sent by the network device is greater than 1, the terminal device may indicate, by using the first information, that the M first TBs in the N first TBs are received incorrectly. Subsequently, the network device may retransmit a part or all of TBs in the M first TBs. Therefore, the network device can retransmit, based on the first information sent by the terminal device, the part or all of TBs in the M first TBs that are received incorrectly, to restore the data.

In addition, the K second TBs included in the second data received by the terminal device are the retransmissions of the K first TBs in the M first TBs that are received incorrectly. The terminal device performs soft combining decoding based on the K first TBs that are received incorrectly and buffered and the K second TBs that are retransmitted. Therefore, the terminal device can fully use a buffered resource to restore the data, thereby improving a success rate and reliability of retransmitting and decoding, and further improving communication efficiency.

Optionally, the K first TBs are K TBs with a smaller index value in one or more TBs that are received incorrectly and that are in the M first TBs; the K first TBs are K TBs with a larger index value in one or more TBs that are received incorrectly and that are in the M first TBs; or indexes of the K first TBs in the M first TBs are preconfigured or dynamically configured.

In a possible implementation of the second aspect, the method further includes: The network device sends second information, where the second information indicates that a quantity of TBs on which the terminal device performs soft combining processing in the first process is P, and K is less than or equal to P.

According to the foregoing technical solution, the network device may further send the second information, so that the terminal device can determine, based on the second information, the quantity of TBs on which soft combining processing is performed in the first process. Subsequently, the terminal device may perform soft combining decoding on retransmitted data based on the quantity P indicated in the second information.

In addition, the second information performs indication, so that when a quantity of processes between the network device and the terminal device is greater than 1, the network device can indicate, for different processes, corresponding quantities of TBs on which soft combining processing is performed, thereby improving implementation flexibility.

In a possible implementation of the second aspect, before the network device sends the second information, the method further includes: The network device receives third information, where the third information indicates a quantity of TBs supported by the terminal device for soft combining processing in the first process.

According to the foregoing technical solution, before the network device sends the second information, the terminal device may further send, to the network device, the third information indicating the quantity of TBs supported by the terminal device for soft combining processing in the first process. This allows the network device to send the second information to the terminal device based on a capability indicated in the third information, ensuring that the value P indicated in the second information by the network device is adapted to the capability of the terminal device.

In a possible implementation of the second aspect, the method further includes: The network device sends fourth information, where the fourth information indicates that quantities of TBs on which the terminal device performs soft combining processing in at least two processes are all P, and the at least two processes include the first process.

According to the foregoing technical solution, the network device may further send the fourth information, so that the terminal device can determine, based on the fourth information, the quantities of TBs on which soft combining processing is performed in the at least two processes, where the at least two processes include the first process. Subsequently, the terminal device may perform soft combining decoding on retransmitted data in the at least two processes based on the quantity P indicated in the second information.

In addition, the fourth information performs indication, so that when a quantity of processes between the network device and the terminal device is greater than 1, the network device can indicate, by using the fourth information, the same quantity of TBs on which soft combining processing is performed, thereby reducing overhead.

In a possible implementation of the second aspect, before the network device receives second information, the method further includes: The network device receives fifth information, where the fifth information indicates quantities of TBs supported by the terminal device for soft combining processing in the at least two processes.

According to the foregoing technical solution, before the network device sends the fourth information, the terminal device may further send, to the network device, the fifth information indicating the quantity of TBs supported by the terminal device for soft combining processing in the at least two processes. This enables the network device to send the fourth information to the terminal device based on a capability indicated in the fifth information, ensuring that the value P indicated in the fourth information by the network device is adapted to the capability of the terminal device.

In a possible implementation of the second aspect, when M is less than or equal to P, K is equal to M.

According to the foregoing technical solution, after the terminal device receives the N first TBs in the first process, when the quantity M of TBs that are received incorrectly is less than or equal to the quantity P of TBs on which the terminal device performs soft combining, the quantity K of retransmitted TBs included in the second data received by the terminal device is equal to the quantity M of TBs received incorrectly, as indicated in the first information by the terminal device. In other words, the M first TBs received incorrectly, as indicated in the first information by the terminal device can all be retransmitted and decoded in a soft combining decoding manner.

In a possible implementation of the second aspect, when M is greater than P, K is equal to P and K is less than M.

According to the foregoing technical solution, after the terminal device receives the N first TBs in the first process, when the quantity of TBs that are received incorrectly is greater than the quantity P of TBs on which the terminal device performs soft combining, the quantity K of retransmitted TBs included in the second data received by the terminal device is less than the quantity M of TBs received incorrectly, as indicated in the first information by the terminal device. In other words, P (or K, because K is equal to P herein) first TBs in the M first TBs received incorrectly, as indicated in the first information by the terminal device, can be retransmitted and decoded in a soft combining decoding manner.

In a possible implementation of the second aspect, the second data further includes M-K third TBs, and the M-K third TBs are retransmissions of M-K first TBs other than the K first TBs in the M first TBs.

According to the foregoing technical solution, when the quantity K of retransmitted TBs included in the second data received by the terminal device is less than the quantity M of TBs received incorrectly, as indicated in the first information by the terminal device, the M-K first TBs other than the K first TBs in the M first TBs may not be retransmitted and decoded in a soft combining decoding manner. Therefore, the terminal device may further receive the M-K third TBs from the second data in the first process, where the M-K third TBs are the retransmissions of the M-K first TBs other than the K first TBs in the M first TBs, so that the terminal device can restore data based on the M-K third TBs.

In a possible implementation of the second aspect, the method further includes: The network device sends third data, where the third data includes M-K third TBs, and the M-K third TBs are retransmissions of M-K first TBs.

According to the foregoing technical solution, when the quantity K of retransmitted TBs included in the second data received by the terminal device is less than the quantity M of TBs received incorrectly, as indicated in the first information by the terminal device, the M-K first TBs other than the K first TBs in the M first TBs may not be retransmitted and decoded in a soft combining decoding manner. Therefore, the terminal device may alternatively receive the M-K third TBs from the third data different from the second data, where the M-K third TBs are the retransmissions of the M-K first TBs other than the K first TBs in the M first TBs, so that the terminal device can restore data based on the M-K third TBs.

Optionally, the third data is data different from the second data, and the third data may be transmitted in the first process, or may be transmitted in another process. This is not limited herein.

In a possible implementation of the second aspect, the second data further includes Q fourth TBs, the Q fourth TBs are different from the K second TBs, and Q is a positive integer.

According to the foregoing technical solution, in addition to the retransmissions of the K first TBs (namely, the K second TBs), the second data may further include the Q fourth TBs different from the second TBs. In this way, when the network device can carry the retransmitted K second TBs in the second data in the first process, the network device can further carry another newly transmitted TB in the second data, so that data transmission in the first process can be fully utilized, and a transmission delay can be reduced.

In a possible implementation of the second aspect, the first information includes any one of the following:
N bits, where the N bits respectively indicate whether the N first TBs are received successfully or incorrectly;
indexes of the M first TBs; and
indexes of the K first TBs and a value M-K.

According to the foregoing technical solution, the first information may be implemented by using any one of the foregoing items, so that the network device can determine, based on any one of the foregoing items, that the M first TBs are received incorrectly, thereby improving implementation flexibility.

In a possible implementation of the second aspect, before the network device sends the first data, the method further includes: The network device sends indication information indicating a redundancy version of the first data; and before the network device sends the second data, the method further includes: The network device sends indication information indicating a redundancy version of the second data.

According to the foregoing technical solution, for data (for example, the first data or the second data) transmitted in a process, the network device may send indication information indicating a redundancy version of the data, so that the terminal device can determine a redundancy version of each data based on the indication information, and determine a data decoding manner based on the redundancy version of each data.

For example, because the K second TBs in the second data are the retransmissions of the K first TBs in the first data, the indication information may indicate that the redundancy version of the first data is different from the redundancy version of the second data, so that the terminal device can determine, based on the different redundancy versions, to perform soft combining decoding on the K second TBs in the second data.

In a possible implementation of the second aspect, before the network device sends the first data, the method further includes: The network device sends indication information indicating redundancy versions corresponding to the N first TBs; and before the network device sends the second data, the method further includes: The network device sends indication information indicating redundancy versions corresponding to the K second TBs, where redundancy versions corresponding to the K first TBs in the N first TBs are different from or the same as the redundancy versions corresponding to the K second TBs.

According to the foregoing technical solution, for one or more TBs (for example, the N first TBs in the first data or the K second TBs in the second data) included in data transmitted in a process, the network device may send indication information indicating redundancy versions of the one or more TBs, so that the terminal device can determine a redundancy version of each TB based on the indication information, and determine a data decoding manner based on the redundancy version of each TB.

For example, because the K second TBs in the second data are the retransmissions of the K first TBs in the first data, the indication information may indicate the redundancy versions of the K second TBs that are in the second data and that correspond to the K first TBs in the first data, so that the terminal device can determine, based on the redundancy versions, to perform soft combining decoding on the K second TBs in the second data.

In a possible implementation of the second aspect, the method further includes: The network device sends indication information indicating that the K second TBs in the second data are used for soft combining decoding.

According to the foregoing technical solution, the network device may further send the indication information indicating that the K second TBs in the second data are used for soft combining decoding, so that after receiving the second data, the terminal device can determine, based on the indication information, to perform soft combining decoding on the K second TBs in the second data.

In a possible implementation of the second aspect, the method further includes: The network device sends indication information indicating that a quantity of retransmitted TBs that are used for soft combining decoding and that are included in the second data is K.

According to the foregoing technical solution, the network device may further send the indication information indicating that the quantity of retransmitted TBs that are used for soft combining decoding and that are included in the second data is K, so that after receiving the second data, the terminal device can determine, based on the indication information, the quantity of TBs that are used for soft combining decoding and that are in the second data.

In a possible implementation of the second aspect, the method further includes: The network device sends sixth information, where the sixth information indicates that a quantity of TBs in the first process is N.

According to the foregoing technical solution, the network device may further send the sixth information, so that the terminal device can determine, based on the sixth information, the quantity of TBs transmitted in the first process. Subsequently, the terminal device may receive data in the first process based on the quantity N indicated in the sixth information.

In addition, the sixth information performs indication, so that when a quantity of processes between the network device and the terminal device is greater than 1, the network device can separately indicate, for different processes, corresponding quantities of transmitted TBs, thereby improving implementation flexibility.

In a possible implementation of the second aspect, the method further includes: The network device sends seventh information, where the seventh information indicates that quantities of TBs in at least two processes are all N, and the at least two processes include the first process.

According to the foregoing technical solution, the network device may further send the seventh information, so that the terminal device can determine, based on the seventh information, the quantities of TBs transmitted in the at least two processes, where the at least two processes include the first process. Subsequently, the terminal device may receive data in the at least two processes based on the quantity N indicated in the seventh information.

In addition, the seventh information performs indication, so that when a quantity of processes between the network device and the terminal device is greater than 1, the network device can indicate the same quantity of transmitted TBs by using the seventh information, thereby reducing overhead.

In a possible implementation of the second aspect, the first information is carried on a physical uplink control channel PUCCH, and a time domain position (for example, a slot position) X of the PUCCH satisfies: $X = n + k + {K}_{offset} ∗ {2}^{u - {u}_{{K}_{offset}}} ,$where
n represents a slot index of a PUCCH slot that overlaps a slot in which a last TB in time domain in the N first TBs is located, k represents a scheduling timing parameter indicated by PDSCH-to-HARQ_feedback signaling, K_{offset} represents a scheduling offset, µ is a subcarrier spacing for PUCCH transmission, and u_{K_{offset}} is a subcarrier spacing configuration of K_{offset}.

According to the foregoing technical solution, a transmission resource for the first information sent by the terminal device may be determined in the foregoing manner, so that the network device can receive the first information on the PUCCH in the foregoing manner.

A third aspect of this application provides a communication apparatus. The apparatus is a terminal device. Alternatively, the apparatus is a part of components (for example, a processor, a chip, or a chip system) in a terminal device. Alternatively, the apparatus may be a logical module or software that can implement all or a part of functions of a terminal device. In the third aspect and possible implementations thereof, an example in which the communication apparatus is the terminal device is used for description.

The apparatus includes a processing unit and a transceiver unit. The transceiver unit is configured to receive first data in a first process, where the first data includes N first transport blocks TBs, and N is an integer greater than 1. The transceiver unit is further configured to send first information, where the first information indicates that M first TBs are received incorrectly, the M first TBs are included in the N first TBs, and M is a positive integer less than or equal to N. The transceiver unit is further configured to receive second data in the first process, where the second data includes K second TBs, and the K second TBs are retransmissions of K first TBs in the M first TBs, where K is less than or equal to M. The processing unit is configured to perform soft combining decoding based on the K first TBs and the K second TBs.

In a possible implementation of the third aspect, the transceiver unit is further configured to receive second information, where the second information indicates that a quantity of TBs on which the terminal device performs soft combining processing in the first process is P, and K is less than or equal to P.

In a possible implementation of the third aspect, the transceiver unit is further configured to send third information, where the third information indicates a quantity of TBs supported by the terminal device for soft combining processing in the first process.

In a possible implementation of the third aspect, the transceiver unit is further configured to receive fourth information, where the fourth information indicates that quantities of TBs on which the terminal device performs soft combining processing in at least two processes are all P, and the at least two processes include the first process.

In a possible implementation of the third aspect, the transceiver unit is further configured to send fifth information, where the fifth information indicates quantities of TBs that are supported by the terminal device for soft combining processing in the at least two processes.

In a possible implementation of the third aspect, when M is less than or equal to P, K is equal to M.

In a possible implementation of the third aspect, when M is greater than P, K is equal to P and K is less than M.

In a possible implementation of the third aspect, the second data further includes M-K third TBs, and the M-K third TBs are retransmissions of M-K first TBs other than the K first TBs in the M first TBs.

In a possible implementation of the third aspect, the transceiver unit is further configured to receive third data, where the third data includes M-K third TBs, and the M-K third TBs are retransmissions of M-K first TBs.

In a possible implementation of the third aspect, the processing unit is further configured to discard decoding soft information of the M-K first TBs other than the K first TBs in the M first TBs.

In a possible implementation of the third aspect, the second data further includes Q fourth TBs, the Q fourth TBs are different from the K second TBs, and Q is a positive integer.

In a possible implementation of the third aspect, the first information includes any one of the following:
N bits, where the N bits respectively indicate whether the N first TBs are received successfully or incorrectly;
indexes of the M first TBs; and
indexes of the K first TBs and a value M-K.

In a possible implementation of the third aspect,
the K first TBs are K TBs with a smaller index value in one or more TBs that are received incorrectly and that are in the M first TBs;
the K first TBs are K TBs with a larger index value in one or more TBs that are received incorrectly and that are in the M first TBs; or
indexes of the K first TBs in the M first TBs are preconfigured or dynamically configured.

In a possible implementation of the third aspect, the transceiver unit is further configured to receive indication information indicating a redundancy version of the first data; and the transceiver unit is further configured to receive indication information indicating a redundancy version of the second data.

In a possible implementation of the third aspect, the transceiver unit is further configured to receive indication information indicating redundancy versions corresponding to the N first TBs; and the transceiver unit is further configured to receive indication information indicating redundancy versions corresponding to the K second TBs, where redundancy versions corresponding to the K first TBs in the N first TBs are different from or the same as the redundancy versions corresponding to the K second TBs.

In a possible implementation of the third aspect, the transceiver unit is further configured to receive indication information indicating that the K second TBs in the second data are used for soft combining decoding.

In a possible implementation of the third aspect, the transceiver unit is further configured to receive indication information indicating that a quantity of retransmitted TBs that are used for soft combining decoding and that are included in the second data is K.

In a possible implementation of the third aspect, the transceiver unit is further configured to receive sixth information, where the sixth information indicates that a quantity of TBs in the first process is N.

In a possible implementation of the third aspect, the transceiver unit is further configured to receive seventh information, where the seventh information indicates that quantities of TBs in at least two processes are all N, and the at least two processes include the first process.

In a possible implementation of the third aspect, the first information is carried on a physical uplink control channel PUCCH, and a time domain position (for example, a slot position) X of the PUCCH satisfies: $X = n + k + {K}_{offset} ∗ {2}^{u - {u}_{{K}_{offset}}} ,$where
n represents a slot index of a PUCCH slot that overlaps a slot in which a last TB in time domain in the N first TBs is located, k represents a scheduling timing parameter indicated by PDSCH-to-HARQ_feedback signaling, K_{offset} represents a scheduling offset, µ is a subcarrier spacing for PUCCH transmission, and u_{K_{offset}} is a subcarrier spacing configuration of K_{offset}.

A fourth aspect of this application provides a communication apparatus. The apparatus is a network device. Alternatively, the apparatus is a part of components (for example, a processor, a chip, or a chip system) in a network device. Alternatively, the apparatus may be a logical module or software that can implement all or a part of functions of a network device. In the fourth aspect and possible implementations thereof, an example in which the communication apparatus is the network device is used for description.

The apparatus includes a processing unit and a transceiver unit. The transceiver unit is configured to send first data in a first process, where the first data includes N first transport blocks TBs, and N is an integer greater than 1. The transceiver unit is further configured to receive first information. The processing unit is configured to determine, based on the first information, that M first TBs are received incorrectly, where the M first TBs are included in the N first TBs, and M is a positive integer less than or equal to N. The transceiver unit is further configured to send second data in the first process, where the second data includes K second TBs, and the K second TBs are retransmissions of K first TBs in the M first TBs, where K is less than or equal to M. The K first TBs and the K second TBs are used for soft combining decoding.

In a possible implementation of the fourth aspect, the transceiver unit is further configured to send second information, where the second information indicates that a quantity of TBs on which a terminal device performs soft combining processing in the first process is P, and K is less than or equal to P.

In a possible implementation of the fourth aspect, the transceiver unit is further configured to receive third information, where the third information indicates a quantity of TBs supported by the terminal device for soft combining processing in the first process.

In a possible implementation of the fourth aspect, the transceiver unit is further configured to send fourth information, where the fourth information indicates that quantities of TBs on which a terminal device performs soft combining processing in at least two processes are all P, and the at least two processes include the first process.

In a possible implementation of the fourth aspect, the transceiver unit is further configured to receive fifth information, where the fifth information indicates quantities of TBs supported by the terminal device for soft combining processing in the at least two processes.

In a possible implementation of the fourth aspect, when M is less than or equal to P, K is equal to M.

In a possible implementation of the fourth aspect, when M is greater than P, K is equal to P and K is less than M.

In a possible implementation of the fourth aspect, the second data further includes M-K third TBs, and the M-K third TBs are retransmissions of M-K first TBs other than the K first TBs in the M first TBs.

In a possible implementation of the fourth aspect, the transceiver unit is further configured to send third data, where the third data includes M-K third TBs, and the M-K third TBs are retransmissions of M-K first TBs.

In a possible implementation of the fourth aspect, the second data further includes Q fourth TBs, the Q fourth TBs are different from the K second TBs, and Q is a positive integer.

In a possible implementation of the fourth aspect, the first information includes any one of the following:
N bits, where the N bits respectively indicate whether the N first TBs are received successfully or incorrectly;
indexes of the M first TBs; and
indexes of the K first TBs and a value M-K.

In a possible implementation of the fourth aspect,
the K first TBs are K TBs with a smaller index value in one or more TBs that are received incorrectly and that are in the M first TBs;
the K first TBs are K TBs with a larger index value in one or more TBs that are received incorrectly and that are in the M first TBs; or
indexes of the K first TBs in the M first TBs are preconfigured or dynamically configured.

In a possible implementation of the fourth aspect, the transceiver unit is further configured to send indication information indicating a redundancy version of the first data; and the transceiver unit is further configured to send indication information indicating a redundancy version of the second data.

In a possible implementation of the fourth aspect, the transceiver unit is further configured to send indication information indicating redundancy versions corresponding to the N first TBs; and the transceiver unit is further configured to send indication information indicating redundancy versions corresponding to the K second TBs, where redundancy versions corresponding to the K first TBs in the N first TBs are different from or the same as the redundancy versions corresponding to the K second TBs.

In a possible implementation of the fourth aspect, the transceiver unit is further configured to send indication information indicating that the K second TBs in the second data are used for soft combining decoding.

In a possible implementation of the fourth aspect, the transceiver unit is further configured to send indication information indicating that a quantity of retransmitted TBs that are used for soft combining decoding and that are included in the second data is K.

In a possible implementation of the fourth aspect, the transceiver unit is further configured to send sixth information, where the sixth information indicates that a quantity of TBs in the first process is N.

In a possible implementation of the fourth aspect, the transceiver unit is further configured to send seventh information, where the seventh information indicates that quantities of TBs in at least two processes are all N, and the at least two processes include the first process.

In a possible implementation of the fourth aspect, the first information is carried on a physical uplink control channel PUCCH, and a time domain position (for example, a slot position) X of the PUCCH satisfies: $X = n + k + {K}_{offset} ∗ {2}^{u - {u}_{{K}_{offset}}} ,$ where
n represents a slot index of a PUCCH slot that overlaps a slot in which a last TB in time domain in the N first TBs is located, k represents a scheduling timing parameter indicated by PDSCH-to-HARQ_feedback signaling, K_{offset} represents a scheduling offset, µ is a subcarrier spacing for PUCCH transmission, and u_{K_{offset}} is a subcarrier spacing configuration of K_{offset}.

A fifth aspect of this application provides a communication apparatus, including at least one processor. The at least one processor is coupled to a memory. The memory is configured to store a program or instructions. The at least one processor is configured to execute the program or instructions, to enable the apparatus to implement the method according to either the first aspect or the second aspect and any possible implementation in either of the first aspect and the second aspect.

A sixth aspect of this application provides a communication apparatus, including at least one logic circuit and an input/output interface. The logic circuit is configured to perform the method according to either the first aspect or the second aspect and any possible implementation in either of the first aspect and the second aspect.

A seventh aspect of this application provides a computer-readable storage medium. The storage medium stores instructions. When the instructions are executed by a processor, the processor performs the method according to either the first aspect or the second aspect and any possible implementation in either of the first aspect and the second aspect.

An eighth aspect of this application provides a computer program product (or referred to as a computer program). The computer program product includes computer program code. When the computer program code is run by a processor, the processor is enabled to perform the method according to either the first aspect or the second aspect and any possible implementation in either of the first aspect and the second aspect.

A ninth aspect of this application provides a chip system. The chip system includes at least one processor, configured to support a communication apparatus in implementing a function in either the first aspect or the second aspect and any possible implementation in either of the first aspect and the second aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, where the interface circuit provides program instructions and/or data for the at least one processor.

A tenth aspect of this application provides a communication system. The communication system includes the communication apparatus according to the third aspect and the communication apparatus according to the fourth aspect. Alternatively, the communication system includes the terminal device according to any one of the foregoing aspects and any implementation of the foregoing aspects, and the network device according to any one of the foregoing aspects and any implementation of the foregoing aspects.

It should be understood that, for technical effect brought by any design in the third aspect to the tenth aspect, refer to the technical effect brought by different designs in the first aspect and the second aspect. Details are not described herein again.

### BRIEF DESCRIPTION OF DRAWINGS

FIG. 1 is a diagram of a communication system according to this application;
FIG. 2a is a diagram of a satellite communication process in a transparent mode according to this application;
FIG. 2b is another diagram of a satellite communication process in a transparent mode according to this application;
FIG. 2c is a diagram of a satellite communication process in a regenerative mode according to this application;
FIG. 2d is another diagram of a satellite communication process in a regenerative mode according to this application;
FIG. 2e is a diagram of a satellite communication process in a 5G system according to this application;
FIG. 3a is a diagram of HARQ retransmission according to this application;
FIG. 3b is another diagram of HARQ retransmission according to this application;
FIG. 4 is a diagram of a communication method according to this application;
FIG. 5a is a diagram of an implementation of data retransmission implemented by a communication method according to this application;
FIG. 5b is a diagram of an implementation of a simulation result implemented by a communication method according to this application;
FIG. 6a is a diagram of another implementation of data retransmission implemented by a communication method according to this application;
FIG. 6b is a diagram of another implementation of data retransmission implemented by a communication method according to this application;
FIG. 7 is a diagram of a communication apparatus according to this application;
FIG. 8 is another diagram of a communication apparatus according to this application;
FIG. 9 is another diagram of a communication apparatus according to this application; and
FIG. 10 is another diagram of a communication apparatus according to this application.

### DESCRIPTION OF EMBODIMENTS

First, some terms in embodiments of this application are explained and described, to help a person skilled in the art have a better understanding.
(1) Terminal device: The terminal device may be a wireless terminal device that can receive scheduling and indication information of a network device. The wireless terminal device may be a device that provides voice and/or data connectivity for a user, a handheld device having a wireless connection function, or another processing device connected to a wireless modem.

The terminal device may be various communication kits (communication kit, where the kit may include, for example, an antenna, a power supply template, a cable, and a Wi-Fi module) having a wireless communication function. The terminal device may alternatively be a communication module having a satellite communication function, a satellite phone or a component thereof, or a very small aperture terminal (very small aperture terminal, VSAT). The terminal device may be a mobile terminal device, for example, a mobile phone (or referred to as a "cellular" phone or a mobile phone (mobile phone)), a computer, or a data card. For example, the terminal device may be a portable, pocket-sized, handheld, computer built-in, or vehicle-mounted mobile apparatus, which exchanges voice and/or data with a radio access network. For example, the terminal device may be a device like a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), user equipment (user equipment, UE), a mobile terminal (mobile terminal, MT), an uncrewed aerial vehicle, or the like. The terminal device may alternatively be a wearable device, or a terminal device in a next-generation communication system, for example, a terminal device in a future communication system or a terminal device in a future evolved public land mobile network (public land mobile network, PLMN). Certainly, the terminal device in this application may alternatively be a chip, a modem, a system on a chip (system on a chip, SoC), or a communication platform that may include a radio frequency (radio frequency, RF) part or the like, which are mainly responsible for a related communication function in the device.

(2) Network device: may be a device in a wireless network. For example, the network device may be a radio access network (radio access network, RAN) node (or device), or may be referred to as a base station, through which the terminal device accesses the wireless network. Currently, some examples of the RAN device are: a next-generation base station in a future communication system, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (base band unit, BBU), a wireless fidelity (wireless fidelity, Wi-Fi) access point (access point, AP), or the like. In addition, in a network structure, the network device may include a central unit (central unit, CU) node, a distributed unit (distributed unit, DU) node, or a RAN device including a CU node and a DU node.

In some implementations, the network device may further include a satellite, an airplane, an uncrewed aerial vehicle, a ground station device connected to a satellite, an airplane, an uncrewed aerial vehicle, and the like.

The network device can send configuration information (for example, carried in a scheduling message and/or an indication message) to the terminal device, and the terminal device further performs network configuration based on the configuration information, so that network configurations of the network device and the terminal device are aligned. Alternatively, a network configuration is preset on the network device, and a network configuration is preset on the terminal device, so that network configurations of the network device and the terminal device are aligned. Specifically, "alignment" means that when there is an interaction message between the network device and the terminal device, the network device and the terminal device have a consistent understanding of a carrier frequency for sending and receiving the interaction message, determining of a type of the interaction message, a meaning of field information carried in the interaction message, or another configuration of the interaction message.

In addition, in another possible case, the network device may be another apparatus providing a wireless communication function for the terminal device. A specific technology and a specific device form used by the network device are not limited in embodiments of this application. For ease of description, this is not limited in embodiments of this application.

In embodiments of this application, an apparatus configured to implement a function of a network device may be a network device, or may be an apparatus that can support the network device in implementing the function, for example, a chip system. The apparatus may be mounted in the network device. In the technical solutions provided in embodiments of this application, an example in which the apparatus configured to implement the function of the network device is the network device is used to describe the technical solutions provided in embodiments of this application.

(3) Configuration and preconfiguration: In this application, both the configuration and the preconfiguration are used. The configuration means that a network device sends configuration information of some parameters or parameter values to a terminal device by using a message or signaling, so that the terminal device determines a communication parameter or a transmission resource based on the values or the information. Similar to the configuration, the preconfiguration may be parameter information or a parameter value negotiated by the network device and the terminal device in advance, may be parameter information or a parameter value used by the network device or the terminal device as specified in a standard protocol, or may be parameter information or a parameter value pre-stored in the network device or the terminal device. This is not limited in this application.

Further, these values and parameters may be changed or updated.

(4) Terms "system" and "network" in embodiments of this application may be used interchangeably. "At least one" means one or more, and "a plurality of" means two or more. "And/Or" describes an association relationship between associated objects, and represents that three relationships may exist. For example, A and/or B may represent the following cases: Only A exists, both A and B exist, and only B exists, where A and B may be singular or plural. A character "/" generally represents an "or" relationship between associated objects. "At least one of the following items (pieces)" or a similar expression thereof means any combination of these items, including a singular item (piece) or any combination of plural items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

(5) "Sending" and "receiving" in embodiments of this application represent signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. The "sending" may alternatively be understood as "outputting" of a chip interface, and the "receiving" may alternatively be understood as "inputting" of the chip interface.

In other words, sending and receiving may be performed between devices, for example, between a network device and a terminal device; or may be performed inside a device, for example, sending or receiving between components, modules, chips, software modules, or hardware modules inside the device through a bus, a trace, or an interface.

It may be understood that necessary processing like coding and modulation may be performed on the information between the source end at which the information is sent and the destination end, but the destination end may understand valid information from the source end. Similar descriptions in this application may be understood similarly, and details are not described again.

(6) In embodiments of this application, "indication" may include a direct indication and an indirect indication, or may include an explicit indication and an implicit indication. Information indicated by a piece of information (for example, indication information described below) is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may alternatively be indicated by using an arrangement sequence of pieces of information that is pre-agreed on (for example, predefined in a protocol), to reduce indication overhead to some extent. A specific indication manner is not limited in this application. It may be understood that, for a sender of the indication information, the indication information may indicate to-be-indicated information, and for a receiver of the indication information, the indication information may be for determining to-be-indicated information.

(7) Soft information: A decoder at a receive side computes a log likelihood ratio (log likelihood ratio, LLR) of a bit value during decoding, which may be considered as a "soft" output of the decoder. In this application, the soft output may be a decoder output that is not finally determined (for example, a bit value is not determined as a value 1 or 0), but may still provide useful information (for example, in a subsequent decoding iteration). Such soft output may be inherently probabilistic (for example, LLR).

(8) Soft combining: Soft information of a received erroneous data packet is stored in a buffer (buffer) (for example, an HARQ buffer), and is combined with soft information of a subsequently received retransmitted data packet, to obtain a more reliable data packet than that obtained through separate decoding (a soft combining process). Then, the combined data is decoded.

For example, a soft combining solution is chase combining, that is, bit information retransmitted is the same as that in original transmission.

For example, another soft combining solution is incremental redundancy, that is, each retransmission is different from an initial transmission. For example, a transmit side may generate a plurality of encoded bit sets, and all encoded bit sets carry same system information and different redundancy information. Each time retransmission is required, an encoded bit set different from that in a previous transmission is transmitted, and a receive side combines retransmitted data with data in the previous transmission. In addition, the encoded bit set of each retransmission becomes a redundancy version (redundancy version, RV). It may be understood that, as a quantity of retransmissions increases, redundancy information is continuously accumulated, and channel encoding efficiency is continuously reduced, thereby obtaining a better decoding effect (improving a decoding success rate).

In this application, unless otherwise specified, for same or similar parts in embodiments, refer to each other. In embodiments of this application and methods/designs/implementations in embodiments, unless otherwise specified or there is a logical conflict, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logical relationship thereof. The following implementations of this application constitute no limitation on the protection scope of this application.

This application may be applied to a long term evolution (long term evolution, LTE) system, a new radio (new radio, NR) system, or an NR vehicle to everything (NR vehicle to everything, NR V2X) system; and may alternatively be applied to a system of hybrid networking of LTE and 5G, a device-to-device (device-to-device, D2D) communication system, a machine-to-machine (machine-to-machine, M2M) communication system, an internet of things (Internet of Things, IoT), an uncrewed aerial vehicle communication system, a communication system that supports a plurality of wireless technologies, for example, an LTE technology and an NR technology, or a non-terrestrial communication system, for example, a satellite communication system or a high-altitude communication platform. In addition, optionally, the communication system may also be applicable to a narrow band-internet of things (narrow band-internet of things, NB-IoT) system, an enhanced data rate for GSM evolution (enhanced data rate for GSM evolution, EDGE) system, a wideband code division multiple access (wideband code division multiple access, WCDMA) system, a code division multiple access 2000 (code division multiple access 2000, CDMA2000) system, a time division-synchronization code division multiple access (time division-synchronization code division multiple access, TD-SCDMA) system, and a future-oriented communication technology or another communication system. The communication system includes a network device and a terminal device. The network device is used as a configuration information sending entity, and the terminal device is used as a configuration information receiving entity. Specifically, in the communication system, an entity sends configuration information to another entity, and sends data to the another entity or receives data sent by the another entity. The another entity receives the configuration information, and sends data to the configuration information sending entity based on the configuration information or receives data sent by the configuration information sending entity. This application may be applied to a terminal device in a connected state or an active (active) state, or may be applied to a terminal device in a non-connected (inactive) state or an idle (idle) state.

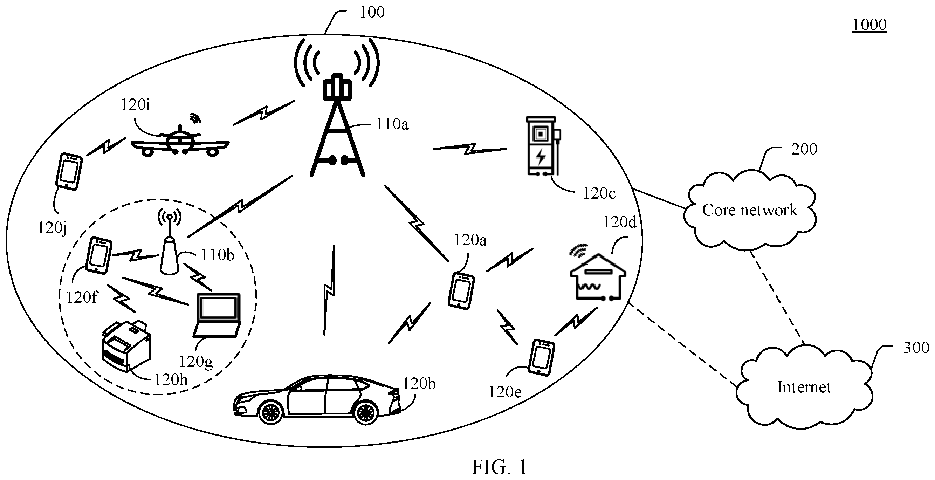

FIG. 1 is a diagram of an architecture of a communication system 1000 to which an embodiment of this application is applied. As shown in FIG. 1, the communication system includes a radio access network (radio access network, RAN) 100 and a core network 200. Optionally, the communication system 1000 may further include an internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner and the RAN nodes may be connected to each other in a wired or wireless manner.

It should be noted that the technical solutions in embodiments of this application are applicable to a communication system that integrates terrestrial communication and satellite communication. The communication system may also be referred to as a non-terrestrial network (non-terrestrial network, NTN) communication system. In other words, the RAN 100 in FIG. 1 may include a terrestrial base station, where the terrestrial base station may include a TN cell (that is, a signal of the TN cell may be received and sent by using the terrestrial base station). In addition, the RAN 100 in FIG. 1 may further include a non-terrestrial base station. For example, the non-terrestrial base station is a satellite, and the satellite may include an NTN cell (that is, a signal of the NTN cell may be received and sent by using the satellite). The terrestrial communication system may be, for example, a long term evolution (long term evolution, LTE) system, a universal mobile telecommunications system (universal mobile telecommunications system, UMTS), a 5G communication system or a new radio (new radio, NR) system, or a communication system developed in a next phase of a 5G communication system. This is not limited herein.

Compared with a conventional mobile communication system, satellite communication has advantages such as a wider coverage area, communication costs irrelevant to a transmission distance, and a capability of overcoming natural geographical obstacles such as oceans, deserts, and mountains. To overcome disadvantages of a conventional communication network, satellite communication may serve as an effective supplement to the conventional network. It is generally considered that, compared with terrestrial network communication, non-terrestrial network communication has different channel features such as a large transmission delay and a large Doppler shift. For example, a round-trip time of GEO satellite communication is 238 to 270 milliseconds (ms). A round-trip time of LEO satellite communication is 8 ms to 20 ms. Based on different orbital heights, satellite communication systems may be classified into the following three types: a high earth orbit (geostationary earth orbit, GEO) satellite communication system, also referred to as a synchronous orbit satellite system, a medium earth orbit (medium earth orbit, MEO) satellite communication system, and a low earth orbit (low earth orbit, LEO) satellite communication system.

A GEO satellite, commonly also referred to as a geostationary orbit satellite, may be located at an orbital height of 35,786 kilometers (km). A main advantage of the GEO satellite is that the GEO satellite is stationary relative to the ground and provides a large coverage area. However, the GEO satellite also has clear disadvantages. For example, a distance from the earth is excessively large, and a large-aperture antenna is required; a transmission delay is long, and is about 0.5s, and cannot meet a requirement of a real-time service; and the GEO satellite has limited orbit resources, high launch costs, and cannot provide coverage for the polar areas. An MEO satellite is located at an orbital height of 2,000 km to 35,786 km, and can implement global coverage with a small quantity of satellites. However, a transmission delay of the MEO satellite is longer than that of an LEO satellite, and the MEO satellite is mainly used for positioning and navigation. In addition, a satellite that is located at an orbital height of 300 km to 2,000 km is referred to as a low earth orbit (LEO) satellite. The LEO satellite has a lower orbital height than the MEO satellite and the GEO satellite, and therefore has a shorter data propagation delay, lower power consumption, and lower launch costs. Therefore, a LEO satellite communication network has made great progress in recent years and has attracted attention.

In a possible implementation, the satellite device may be classified into a transparent (transparent) mode and a regenerative (regenerative) mode based on an operating mode.

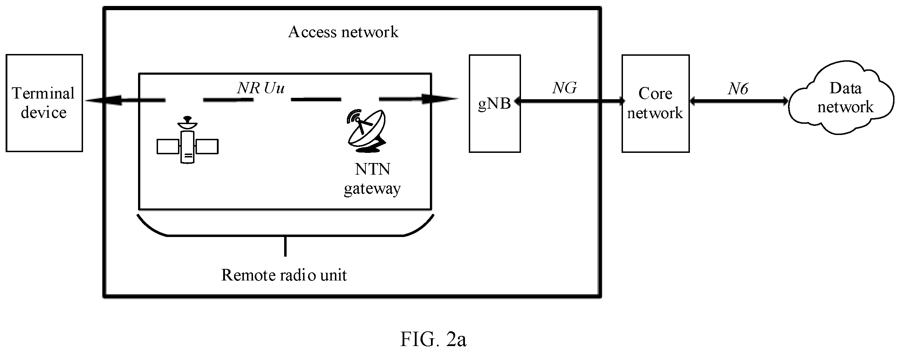

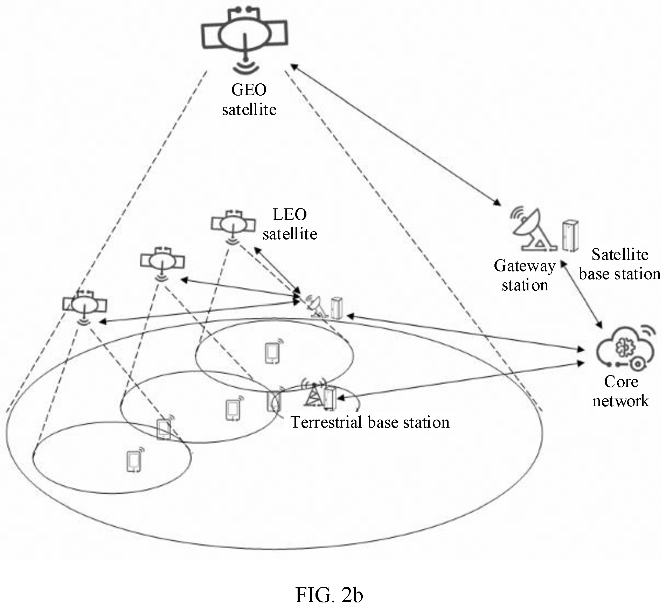

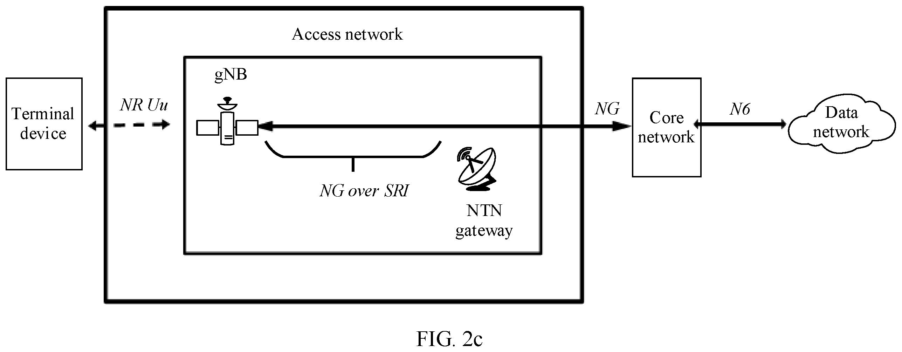

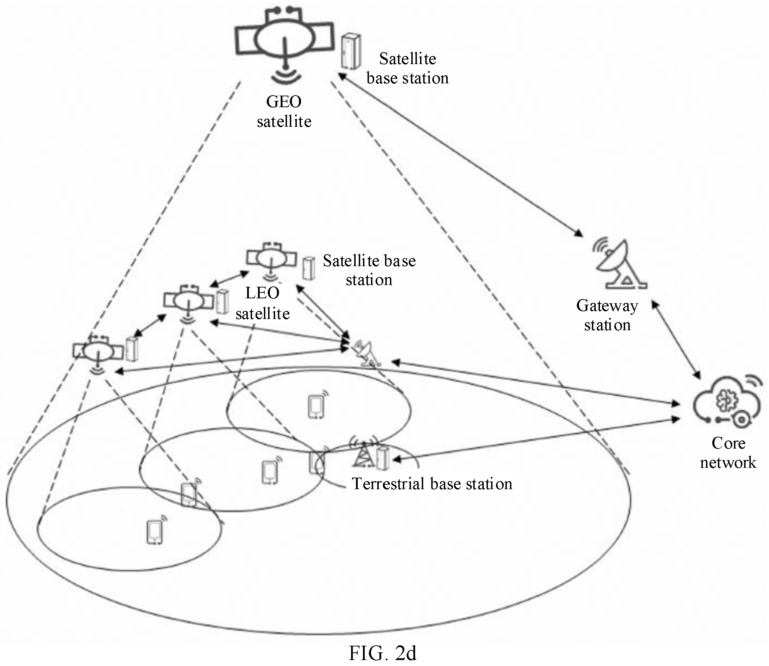

The following describes the two modes by using examples in implementations shown in FIG. 2a, FIG. 2b, FIG. 2c, and FIG. 2d.

For example, in the implementation in the transparent mode shown in FIG. 2a, a satellite and a gateway station (namely, an NTN gateway in FIG. 2a) are used as a relay, namely, a remote radio unit (Remote Radio Unit) shown in FIG. 2a. A terminal device and a gNB need to communicate with each other through a relay process. In other words, in the transparent mode, the satellite has a relay forwarding function.

For example, in the implementation in the transparent mode shown in FIG. 2b, when a satellite (including a GEO satellite, an MEO satellite, an LEO satellite, and the like) operates in the transparent mode, the satellite has a relay forwarding function. A gateway station has functions or a part of functions of a base station. In this case, the gateway station may be considered as a base station. Alternatively, if a base station and the gateway station are separately deployed, a delay of a feeder link includes a delay from the satellite to the gateway station and a delay from the gateway station to a gNB.

Optionally, the transparent mode may be described by using an example in which the gateway station and the gNB are together or are close to each other. In a case in which the gateway station is far away from the gNB, the delay of the feeder link is a sum of the delay from the satellite to the gateway station and the delay from the gateway station to the gNB.

For example, in the implementation in the regenerative mode shown in FIG. 2c, a satellite and a gateway station (namely, an NTN gateway in FIG. 2c) are used as a gNB, and may communicate with a terminal device. In other words, in the regenerative mode, the satellite has functions or a part of functions of a base station. In this case, the satellite may be considered as a base station.

For example, in the implementation in the regenerative mode shown in FIG. 2d, when a satellite (including a GEO satellite, an MEO satellite, an LEO satellite, and the like) operates in the regenerative mode, compared with the implementation shown in FIG. 2b, the satellite has functions or a part of functions of a base station. In this case, the satellite may be considered as a base station.

It should be noted that a base station of an NTN and a base station of a terrestrial network may be interconnected via a common core network. Alternatively, collaboration and interconnection with higher timeliness may be implemented by using an interface defined between base stations. In NR, an interface between base stations is referred to as an Xn interface, and an interface between a base station and a core network is referred to as an NG interface. In a converged network, both an NTN node and a terrestrial node may implement interworking and collaboration through the foregoing interfaces.

It should be noted that this application may be applied to a long term evolution (long term evolution, LTE) system, a new radio (new radio, NR) system, or a future communication system.

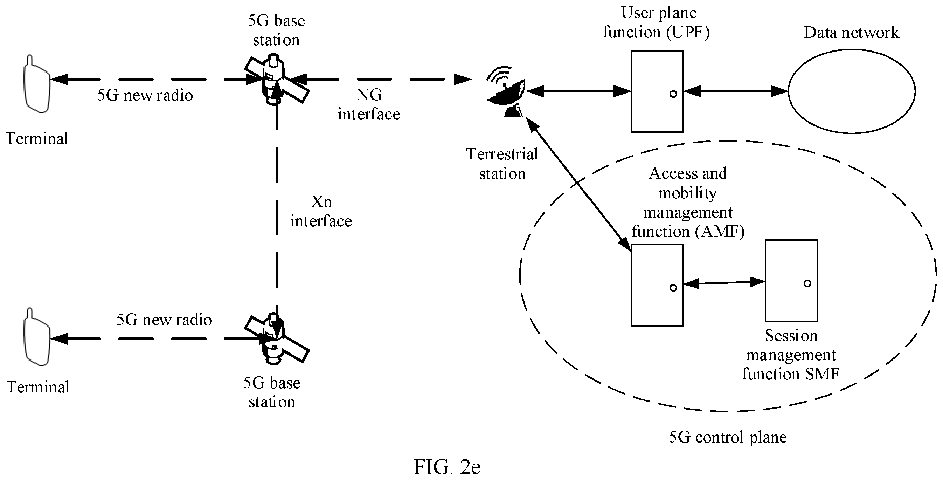

5G is used as an example. FIG. 2e shows an architecture of a 5G satellite communication system. A terrestrial terminal device accesses a network through 5G new radio. A 5G base station is deployed on a satellite, and is connected to a terrestrial core network through a radio link. In addition, there is a radio link between satellites, to complete signaling interaction and user data transmission between base stations. Devices and interfaces in FIG. 2e are described as follows:
A 5G core network provides services such as user access control, mobility management, session management, user security authentication, and charging. The 5G core network includes a plurality of functional units that may be divided into a control plane functional entity and a data plane functional entity. An access and mobility management function (access and mobility management function, AMF) is responsible for user access management, security authentication, and mobility management. A user plane function (user plane function, UPF) is responsible for functions such as managing user plane data transmission and traffic statistics. A session management function (session management function, SMF) is mainly used for session management in a mobile network, for example, session establishment, modification, and release.

Terrestrial station: responsible for forwarding signaling and service data between a satellite base station and the 5G core network.

5G new radio: a radio link between a terminal and a base station.

Xn interface: an interface between 5G base stations, and mainly used for exchanging signaling, for example, handover.

NG interface: is an interface between a 5G base station and the 5G core network, and mainly exchanges non-access stratum (non-access stratum, NAS) signaling or other signaling of the core network, and service data of a user.

In addition, a network device in the terrestrial network communication system and a satellite in the NTN communication system may be collectively considered as network devices. An apparatus configured to implement a function of a network device may be a network device, or may be an apparatus that can support the network device in implementing the function, for example, a chip system. The apparatus may be mounted in the network device. When the technical solutions provided in embodiments of this application are described below, an example in which an apparatus configured to implement a function of a network device is a satellite is used to describe the technical solutions provided in embodiments of this application. It may be understood that, when a method provided in embodiments of this application is applied to the terrestrial network communication system, an action performed by the satellite may be applied to the base station or the network device for execution.

In embodiments of this application, an apparatus configured to implement a function of a terminal device may be a terminal device, or may be an apparatus that can support the terminal device in implementing the function, for example, a chip system. The apparatus may be mounted in the terminal device. In embodiments of this application, the chip system may include a chip, or may include a chip and another discrete device. In the technical solutions provided in embodiments of this application, an example in which an apparatus configured to implement a function of a terminal device is a terminal or UE is used to describe the technical solutions provided in embodiments of this application.

In addition, the satellite may be a geostationary satellite, a non-geostationary satellite, an artificial satellite, a low earth orbit satellite, a medium earth orbit satellite, a high earth orbit satellite, or the like. This is not specifically limited herein in this application.

The foregoing content describes a plurality of wireless communication scenarios in this application. It should be understood that the foregoing content is merely an example of scenarios to which this application may be applied. This application may be further applied to another application scenario. This is not limited herein. The following describes a wireless communication process in this application.

In the communication system shown in FIG. 1, FIG. 2a, FIG. 2b, FIG. 2c, FIG. 2d, or FIG. 2e, in a data receiving and sending process, that a receiver fails to receive correct information is referred to as a bit error (or a receiving error, a parsing error, or the like). Generally, after detecting a bit error, the receiver may request a sender to retransmit erroneous data.

One retransmission solution is physical (physical, PHY) layer/medium access control (medium access control, MAC) layer retransmission. An HARQ mechanism at a MAC layer is the most commonly used retransmission mechanism. It enables the receiver to immediately feed back, to the sender, a result indicating that information is transmitted successfully or fails to be transmitted, thereby implementing fast retransmission.

Another retransmission solution is radio link control (radio link control, RLC) retransmission. An automatic repeat request (automatic repeat request, ARQ) mechanism at an RLC layer is used as a supplement to the retransmission mechanism at the MAC layer. Compared with the HARQ mechanism, RLC layer retransmission has lower feedback status report transmission frequency, and smaller feedback overhead. However, a retransmission delay of the RLC layer retransmission is much longer than that of the PHY/MAC layer retransmission. Therefore, combining an HARQ at the MAC layer with an ARQ at the RLC layer can meet data transmission requirements in different application scenarios.

Another retransmission solution is packet data convergence protocol (packet data convergence protocol, PDCP) retransmission. The PDCP layer retransmission is mainly used in a scenario in which a terminal device performs cell handover across an access network device (for example, a gNB). Because related configurations and buffers of lower-layer protocols (for example, RLC layer and MAC layer protocols) are cleared during the handover, but are not cleared at a PDCP layer, a retransmission function of the PDCP layer can ensure that data is not lost due to the handover.

The following describes an implementation process of HARQ retransmission. The HARQ retransmission involves a description of the stop-and-wait protocol (Stop-and-Wait Protocol). The stop-and-wait protocol means that a sender stops sending each time the sender completes sending a TB, and waits for an acknowledgement from a receiver.

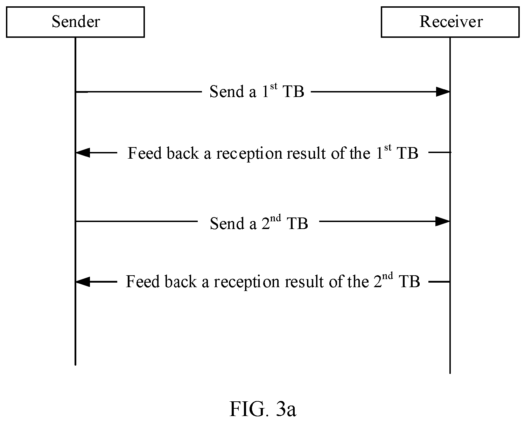

For example, FIG. 3a is used as an example. After the sender sends a 1^{st} TB, the receiver may feed back a reception result of the 1^{st} TB. In addition, when the reception result of the 1^{st} TB indicates that the 1^{st} TB is received successfully, the sender sends a 2^{nd} TB. Correspondingly, the receiver may feed back a reception result of the 2^{nd} TB. By analogy, after the sender receives a feedback indicating that a TB is received successfully, the sender may send a next TB.

The stop-and-wait protocol has the following two characteristics:
Characteristic 1: The receiver sends feedback information to the sender, and the receiver needs to feed back a receiving status to the sender regardless of whether information is received correctly or not.
Characteristic 2: The sender continues to send information only after receiving acknowledgement information from the receiver. In other words, a next piece of information is not sent until a previous piece of information is acknowledged.

In the foregoing implementation process, in the stop-and-wait protocol, the sender needs to stop and wait for a feedback from the receiver each time the sender sends information. This causes a low throughput. Therefore, in the HARQ, a plurality of stop-and-wait processes are used for parallel processing. When one process is waiting for acknowledgement, the sender may use another process to continue sending information. Similarly, when processing information received in one process, the receiver may use another process to continue receiving information. A plurality of HARQ processes are for parallel processing to form an HARQ entity. Each uplink or downlink carrier corresponds to one HARQ entity. According to the current NR protocol, one HARQ entity supports a maximum of 32 HARQ processes.

Generally, the maximum quantity of processes represents only an upper limit of a quantity of processes, and not all processes are used. When a plurality of processes are used for transmission, each process may have an independent HARQ feedback. The HARQ feedback is the feedback information sent by the receiver in the HARQ mechanism. The sender determines, based on the feedback information from the receiver, whether data is transmitted successfully. An acknowledgement (acknowledgement, ACK) represents that the data is received successfully or transmitted successfully, and a NACK represents that the data fails to be received or fails to be transmitted.

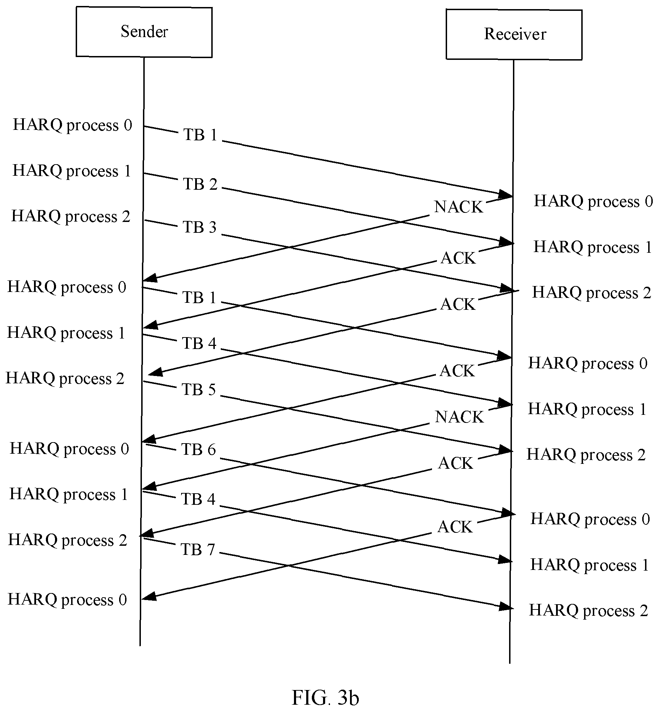

For example, three HARQ processes in FIG. 3b are used as an example. The three HARQ processes are respectively an HARQ process 0, an HARQ process 1, and an HARQ process 2. Compared with the implementation process in FIG. 3a, in FIG. 3b, an ACK/NACK may be separately fed back for the three HARQ processes.

It can be learned from the foregoing description of the HARQ retransmission that, when the sender is a network device and the receiver is a terminal device, data sent by the network device is generally a transport block (transport block, TB). If the terminal device determines that a bit error occurs in received data, the terminal device may feed back a negative acknowledgement (negative acknowledgement, NACK) through a hybrid automatic repeat request (hybrid automatic repeat request, HARQ). Correspondingly, the network device may determine, based on the NACK, to retransmit the TB.

In the foregoing implementation process, data transmitted in one HARQ process is one TB, and one HARQ feedback (for example, an ACK/NACK) is for the TB. This implementation may have some problems in some scenarios. For example, in an NTN scenario, to improve a throughput of an NTN system, a disable HARQ feedback (disable HARQ feedback) feature may be added. After feedback is disabled for an HARQ process, the terminal does not feed back a decoding result, or feeds back a NACK regardless of whether the decoding is correct. For example, if an SCS is equal to 120 kHz, an orbital height of a satellite is greater than 110 km, and a round-trip time (round-trip time, RTT) is greater than 4 ms, a time domain resource of the round-trip time cannot be fully used by 32 HARQ processes (it is assumed that one TB occupies one slot, and one TB occupies one process; when the SCS is 120 kHz, a slot length is 0.125 ms; when the 32 processes are performed in parallel, the time domain resource occupies 0.125*32=4 ms; and when the RTT is greater than 4 ms, the 32 processes cannot fully occupy the time domain resource). Therefore, feedbacks of a part or all of HARQ processes need to be disabled, to fully use the time domain resource.

In conclusion, currently, in an NR-NTN system, ACKs/NACKs are fed back in a unit of TB. An NR-NTN supports a maximum of 32 HARQ processes. When the RTT is large, only HARQ feedback at the PHY/MAC layer can be disabled. In this case, PHY/MAC layer retransmission is not supported. To ensure correct transmission, data packets that are decoded incorrectly are retransmitted at the RLC layer to ensure reliable transmission in the system. When PHY/MAC layer retransmission is not supported, a target BLER (target BLER) at the physical layer needs to be set to 0.01 to ensure that an error rate of data (for example, a protocol data unit (protocol data unit, PDU)) received at the RLC layer is not higher than 1%. When the HARQ feedback is disabled, the target BLER (target BLER) at the physical layer needs to be set to 0.01. Compared with a case in which the HARQ feedback is not disabled and the target BLER (target BLER) at the physical layer needs to be set to 0.1, the spectral efficiency decreases.

In other words, to avoid or reduce a case in which spectral efficiency decreases, the network device may transmit a plurality of TBs in one HARQ process. For example, the data sent by the network device may include two or more TBs. In this case, if a bit error occurs, how to implement data retransmission is not resolved in the implementation processes shown in FIG. 3a and FIG. 3b.

To resolve the foregoing problem, this application provides a communication method and a related device, so that a network device can retransmit, based on first information sent by a terminal device, a part or all of TBs in M first TBs that are received incorrectly, to restore data. In addition, the terminal device can fully use a buffered resource to restore the data, thereby improving a success rate and reliability of retransmitting and decoding, and further improving communication efficiency. The following provides detailed descriptions with reference to the accompanying drawings.

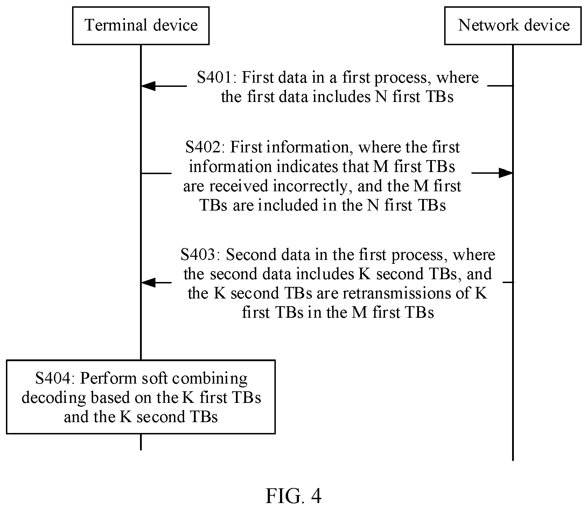

FIG. 4 is a diagram of a communication method according to this application. The method includes the following steps.

It should be noted that, in this application, the method provided in this application is illustrated by using an example in which a network device and a terminal device are used as execution bodies of the interaction example. However, the execution bodies of the interaction example are not limited in this application. For example, a method performed by the network device may alternatively be performed by a module (for example, a chip, a chip system, or a processor) of the network device, or may be implemented by a logical node, a logical module, or software that can implement all or a part of functions of the network device. A method performed by the terminal device may alternatively be performed by a module (for example, a chip, a chip system, or a processor) of the terminal device, or may be implemented by a logical node, a logical module, or software that can implement all or a part of functions of the terminal device.

The method shown in FIG. 4 includes steps S401 to S404. The following separately describes the steps.

S401: The network device sends first data in a first process, and correspondingly, the terminal device receives the first data in the first process. The first data includes N first TBs, and N is an integer greater than 1.

S402: The terminal device sends first information, and correspondingly, the network device receives the first information. The first information indicates that M first TBs are received incorrectly, the M first TBs are included in the N first TBs, and M is a positive integer less than or equal to N.

S403: The network device sends second data in the first process, and correspondingly, the terminal device receives the second data in the first process. The second data includes K second TBs, and the K second TBs are retransmissions of K first TBs in the M first TBs.

S404: The terminal device performs soft combining decoding based on the K first TBs and the K second TBs.

It should be noted that, in a process of communication between the network device and the terminal device, the network device may configure one or more processes (processes) for data of the communication between the two devices, and perform data transmission by using the one or more processes. In this application, a process may be replaced with a thread.

It should be understood that, in the one or more processes, the network device may send one or more TBs to the terminal device in any process. For the any process, one or more TBs in the process may be referred to as data (for example, the first data, the second data, or third data mentioned below). Alternatively, one or more TBs in the process may be referred to as a TB group, a TB set, or the like. In other words, data in this application may be replaced with a TB group, a TB set, or the like. For example, the first data may be replaced with a first TB group (or a first TB set), the second data may be replaced with a second TB group (or a second TB set), and the third data may be replaced with a third TB group (or a third TB set).

In this application, a receiving error may be understood as another term like a decoding error, a parsing error, unsuccessful decoding, unsuccessful parsing, or unsuccessful receiving. Correspondingly, the receiving error may also be replaced with the another term.

In this application, soft combining decoding may be understood as combining decoding performed based on buffered soft information and retransmitted information. Correspondingly, soft combining decoding may be replaced with other terms such as soft combining processing and retransmission soft combining.

In a possible implementation, in step S404, the terminal device may perform soft combining decoding based on different transmissions in a same process. To improve a success rate of soft combining decoding performed by the terminal device, the terminal device may determine, based on an indication of the network device, a quantity of TBs on which the terminal device performs soft combining processing in the first process. The following provides descriptions with reference to some implementation examples.

In an implementation example 1, before step S404, the method further includes: The terminal device receives second information, where the second information indicates that a quantity of TBs on which the terminal device performs soft combining processing in the first process is P, and K is less than or equal to P.

In the implementation example 1, the terminal device may further receive the second information, so that the terminal device can determine, based on the second information, the quantity of TBs on which soft combining processing is performed in the first process. Subsequently, the terminal device may perform soft combining decoding on retransmitted data based on the quantity P indicated in the second information.

In addition, the second information performs indication, so that when a quantity of processes between the network device and the terminal device is greater than 1, the network device can indicate, for different processes, corresponding quantities of TBs on which soft combining processing is performed, thereby improving implementation flexibility.

In a possible implementation of the implementation example 1, before the terminal device receives the second information, the method further includes: The terminal device sends third information, where the third information indicates a quantity of TBs supported by the terminal device for soft combining processing in the first process.

Specifically, before the terminal device receives the second information, the terminal device may further send, to the network device, the third information indicating the quantity of TBs supported by the terminal device for soft combining processing in the first process. This allows the network device to send the second information to the terminal device based on a capability indicated in the third information, ensuring that the value P indicated in the second information by the network device is adapted to the capability of the terminal device.

Optionally, the third information may indicate one or more quantities of TBs , supported by the terminal device for soft combining processing in the first process.

Further, optionally, each of the one or more quantities of TBs is greater than or equal to P.

Further, optionally, one of the one or more quantities of TBs is P.

In an implementation example, the third information received by the terminal device may be implemented as shown in Table 1 below.

**Table 1**

| Process identifier | Quantity of TBs used for soft combining decoding |
|---|---|
| 0 | 2 |
| 1 | 2 |
| 2 | 1 |
| 3 | 1 |
| 4 | 0 |
| 5 | 0 |
| ... | ... |

As shown in Table 1, the network device may separately configure, for different processes corresponding to different process identifiers, quantities of TBs used for soft combining decoding, so that the network device can separately indicate corresponding quantities of transmitted TBs for different processes, thereby improving implementation flexibility. It may be understood that the first process described above may be any one of the processes with process identifiers 0 to 3 in Table 1.

In an implementation example 2, before step S404, the method further includes: The terminal device receives fourth information, where the fourth information indicates that quantities of TBs on which the terminal device performs soft combining processing in at least two processes are all P, and the at least two processes include the first process.

Specifically, the terminal device may further receive the fourth information, so that the terminal device can determine, based on the fourth information, the quantities of TBs on which soft combining processing is performed in the at least two processes, where the at least two processes include the first process. Subsequently, the terminal device may perform soft combining decoding on retransmitted data in the at least two processes based on the quantity P indicated in the second information.

In addition, by using the fourth information for indication, when a quantity of processes between the network device and the terminal device is greater than 1, the network device can indicate, by using the fourth information, the same quantity of TBs on which soft combining processing is performed, thereby reducing overhead.

Optionally, in addition to the first process, the at least two processes may further include another process, for example, a second process or a third process.

Optionally, the second information and the fourth information may be carried in a configuration message of the network device, for example, an RRC message, DCI, or a MAC CE.

In a possible implementation of the implementation example 2, before the terminal device receives second information, the method further includes: The terminal device sends fifth information, where the fifth information indicates quantities of TBs supported by the terminal device for soft combining processing in the at least two processes and that are of TBs. Specifically, before the terminal device receives the fourth information, the terminal device may further send, to the network device, the fifth information indicating the quantities of TBs supported by the terminal device for soft combining processing in the at least two processes. This enables the network device to send the fourth information to the terminal device based on a capability indicated in the fifth information, ensuring that the value P indicated in the fourth information by the network device is adapted to the capability of the terminal device.

In a possible implementation, the first information sent by the terminal device in step S402 includes any one of the following information A to C:
information A: N bits, where the N bits respectively indicate whether the N first TBs are received successfully or incorrectly;
information B: indexes of the M first TBs; and
information C: indexes of the K first TBs and a value M-K.

Specifically, the first information may be implemented by using any one of the foregoing items, so that the network device can determine, based on any one of the foregoing items, that the M first TBs are received incorrectly, thereby improving implementation flexibility.

In an implementation example, an example in which a value of N is 10, a value of M is 5, and a value of K is 2 is used. In other words, the first data received by the terminal device in step S401 includes 10 first TBs, and the terminal device determines that the first five of the first TBs among the 10 first TBs are received incorrectly.

For example, when the first information is the foregoing information A, the first information may be specifically 10 bits "0000011111". The position of each bit in the 10 bits may indicate whether a corresponding TB is received successfully or incorrectly. A value of 0 indicates that the TB is received incorrectly, and a value of 1 indicates that the TB is received successfully. Correspondingly, values of the first five bits being 0 indicates that the first five of the first TBs are received incorrectly, and values of the last five bits being 1 indicates that the last five first TBs are received successfully.

For another example, when the first information is the foregoing information B, the first information may be specifically indexes of the first five of the first TBs, for example, 1, 2, 3, 4, and 5. In other words, the network device may determine, based on the index values "1, 2, 3, 4, and 5", that the first TBs with index values "1, 2, 3, 4, and 5" among the 10 first TBs are received incorrectly.

For another example, when the first information is the foregoing information C, the first information may specifically include indexes of two first TBs, for example, 1 and 2, and a value 3 (that is, a difference between M and K is 3). In other words, the network device may determine, based on the index values "1 and 2", that the first TBs with index values "1 and 2" among the 10 first TBs are received incorrectly. In addition, the network device may further determine that, in addition to the first TBs with index values "1 and 2" among the 10 first TBs, another three first TBs are received incorrectly. Soft combining decoding may be performed on the first TBs with index values "1 and 2" based on the second data retransmitted in step S403. Optionally, the other three first TBs may be transmitted in another manner (for example, as new data transmission), so that the terminal device restores data of the other three first TBs.

In a possible implementation, before the terminal device receives the first data, the method further includes: The terminal device receives indication information indicating a redundancy version of the first data; and before receiving the second data, the method further includes: The terminal device receives indication information indicating a redundancy version of the second data. Specifically, for data (for example, the first data or the second data) transmitted in a process, the network device may send indication information indicating a redundancy version of the data, so that the terminal device can determine a redundancy version of each data based on the indication information, and determine a data decoding manner based on the redundancy version of each data.

For example, because the K second TBs in the second data are the retransmissions of the K first TBs in the first data, the indication information may indicate that the redundancy version of the first data is different from the redundancy version of the second data, so that the terminal device can determine, based on the different redundancy versions, to perform soft combining decoding on the K second TBs in the second data.

In a possible implementation, before receiving the first data, the method further includes: The terminal device receives indication information indicating redundancy versions corresponding to the N first TBs; and before receiving the second data, the method further includes: The terminal device receives indication information indicating redundancy versions corresponding to the K second TBs, where redundancy versions corresponding to the K first TBs in the N first TBs are different from or the same as the redundancy versions corresponding to the K second TBs. Specifically, for one or more TBs (for example, the N first TBs in the first data or the K second TBs in the second data) included in data transmitted in a process, the network device may send indication information indicating redundancy versions of the one or more TBs, so that the terminal device can determine a redundancy version of each TB based on the indication information, and determine a data decoding manner based on the redundancy version of each TB.

For example, because the K second TBs in the second data are the retransmissions of the K first TBs in the first data, the indication information may indicate that the redundancy versions of the K first TBs in the first data are different from or the same as the redundancy versions of the K second TBs in the second data, so that the terminal device can determine, based on the redundancy versions, to perform soft combining decoding on the K second TBs in the second data.

Optionally, the indication information indicating the redundancy version may be carried in an RRC message, DCI, a MAC CE, or the like. For example, the indication information is carried in the DCI. The first data or the second data may be carried on a physical downlink shared channel (physical downlink shared channel, PDSCH), the DCI may be DCI in a physical downlink control channel (physical downlink control channel, PDCCH) used to schedule the PDSCH, and the indication information may be carried in a field/information element/field that indicates an RV and that is in the DCI.

In a possible implementation, the method further includes: The terminal device receives indication information indicating that the K second TBs in the second data are used for soft combining decoding. Specifically, the terminal device may further receive the indication information indicating that the K second TBs in the second data are used for soft combining decoding, so that after receiving the second data, the terminal device can determine, based on the indication information, to perform soft combining decoding on the K second TBs in the second data.

Optionally, the indication information indicating that the K second TBs in the second data are used for soft combining decoding may be carried in an RRC message, DCI, a MAC CE, or the like. For example, the indication information is carried in the DCI. The second data may be carried on a PDSCH, and the DCI may be DCI in a PDCCH used to schedule the PDSCH.

In a possible implementation, the method further includes: The terminal device receives indication information indicating that a quantity of retransmitted TBs that are used for soft combining decoding and that are included in the second data is K. Specifically, the terminal device may further receive the indication information indicating that the quantity of retransmitted TBs that are used for soft combining decoding and that are included in the second data is K, so that after receiving the second data, the terminal device can determine, based on the indication information, the quantity of TBs that are used for soft combining decoding and that are in the second data.

Optionally, the indication information indicating that the quantity of retransmitted TBs that are used for soft combining decoding and that are included in the second data is K may be carried in an RRC message, DCI, a MAC CE, or the like. For example, the indication information is carried in the DCI. The second data may be carried on a PDSCH, and the DCI may be DCI in a PDCCH used to schedule the PDSCH.

In a possible implementation, the method further includes: The terminal device receives sixth information, where the sixth information indicates that a quantity of TBs in the first process is N. Specifically, the terminal device may further receive the sixth information, so that the terminal device can determine, based on the sixth information, the quantity of TBs transmitted in the first process. Subsequently, the terminal device may receive data in the first process based on the quantity N indicated in the sixth information.

In addition, the sixth information performs indication, so that when a quantity of processes between the network device and the terminal device is greater than 1, the network device can separately indicate, for different processes, corresponding quantities of transmitted TBs, thereby improving implementation flexibility.

In a possible implementation, the method further includes: The terminal device receives seventh information, where the seventh information indicates that quantities of TBs in at least two processes are all N, and the at least two processes include the first process. Specifically, the terminal device may further receive the seventh information, so that the terminal device can determine, based on the seventh information, the quantities of TBs transmitted in the at least two processes, where the at least two processes include the first process. Subsequently, the terminal device may receive data in the at least two processes based on the quantity N indicated in the seventh information.

In addition, the seventh information performs indication, so that when a quantity of processes between the network device and the terminal device is greater than 1, the network device can indicate the same quantity of transmitted TBs by using the seventh information, thereby reducing overhead.

Optionally, the indication information indicating that the quantity of retransmitted TBs that are used for soft combining decoding and that are included in the second data is K may be carried in an RRC message, DCI, a MAC CE, or the like.

In an implementation example, the sixth information received by the terminal device is used as an example, and may be implemented in a manner shown in the following Table 2 by the network device.

**Table 2**

| Process identifier | Quantity of TBs | Quantity of TBs used for soft combining decoding |
|---|---|---|
| 0 | 10 | 2 |
| 1 | 10 | 2 |
| 2 | 5 | 1 |
| 3 | 5 | 1 |
| 4 | 1 | 0 |
| 5 | 1 | 0 |
| ... | | ... |

As shown in Table 2, the network device may separately configure, for different processes corresponding to different process identifiers, quantities of TBs used for soft combining decoding, and the network device may separately configure, for the different processes corresponding to the different process identifiers, quantities of TBs transmitted in the processes. In this way, the network device can separately indicate corresponding quantities of transmitted TBs for different processes, thereby improving implementation flexibility. It may be understood that the first process described above may be any one of the processes with process identifiers 0 to 3 in Table 2.

In a possible implementation, the first information sent by the terminal device in step S402 indicates that the M first TBs are received incorrectly. When M has different values, the terminal device may perform processing in different manners. The following provides detailed descriptions with reference to some implementation examples.

Implementation example A: When M is less than or equal to P, K is equal to M.

In the implementation example A, after the terminal device receives the N first TBs in the first process in step S401, when the quantity M of TBs that are received incorrectly is less than or equal to the quantity P of TBs on which the terminal device performs soft combining, the quantity K of retransmitted TBs included in the second data received by the terminal device in step S403 is equal to the quantity M of TBs received incorrectly, as indicated in the first information by the terminal device. In other words, the M first TBs received incorrectly, as indicated in the first information by the terminal device, can all be retransmitted and decoded in a soft combining decoding manner.

Implementation example B: When M is greater than P, K is equal to P and K is less than M.

In the implementation example B, after the terminal device receives the N first TBs in the first process in step S401, when the quantity of TBs that are received incorrectly is greater than the quantity P of TBs on which the terminal device performs soft combining, the quantity K of retransmitted TBs included in the second data received by the terminal device in step S403 is less than the quantity M of TBs received incorrectly, as indicated in the first information by the terminal device. In other words, P (or K, because K is equal to P herein) first TBs in the M first TBs received incorrectly, as indicated in the first information by the terminal device, can be retransmitted and decoded in a soft combining decoding manner.

Optionally, in step S404, the K first TBs on which the terminal device performs soft bit combining decoding are K TBs with a smaller index value in one or more TBs in the M first TBs received incorrectly, as indicated in the first information; the K first TBs are K TBs with a larger index value in one or more TBs in the M first TBs received incorrectly; or indexes of the K first TBs in the M first TBs are preconfigured or dynamically configured.

In a possible implementation of the implementation example B, the second data further includes M-K third TBs, and the M-K third TBs are retransmissions of M-K first TBs other than the K first TBs in the M first TBs. Specifically, when the quantity K of retransmitted TBs included in the second data received by the terminal device is less than the quantity M of TBs received incorrectly, as indicated the first information by the terminal device, the M-K first TBs other than the K first TBs in the M first TBs may not be retransmitted and decoded in a soft combining decoding manner. Therefore, the terminal device may further receive the M-K third TBs from the second data in the first process, where the M-K third TBs are the retransmissions of the M-K first TBs other than the K first TBs in the M first TBs, so that the terminal device can restore data based on the M-K third TBs.

It should be understood that, because the quantity of TBs on which the terminal device performs soft combining processing in the first process is P, when the quantity K of retransmitted TBs included in the second data received by the terminal device is less than the quantity M of TBs received incorrectly, as indicated in the first information by the terminal device, the terminal device may decode the M-K third TBs in a manner other than the soft combining decoding manner. For example, the terminal device may decode the M-K third TBs in a manner of decoding newly transmitted data.

In a possible implementation of the implementation example B, the method further includes: The terminal device receives third data, where the third data includes M-K third TBs, and the M-K third TBs are retransmissions of M-K first TBs. Specifically, when the quantity K of retransmitted TBs included in the second data received by the terminal device is less than the quantity M of TBs received incorrectly, as indicated in the first information by the terminal device, the M-K first TBs other than the K first TBs in the M first TBs may not be retransmitted and decoded in a soft combining decoding manner. Therefore, the terminal device may alternatively receive the M-K third TBs from the third data different from the second data, where the M-K third TBs are the retransmissions of the M-K first TBs other than the K first TBs in the M first TBs, so that the terminal device can restore data based on the M-K third TBs.

Optionally, the third data is data different from the second data, and the third data may be transmitted in the first process, or may be transmitted in another process. This is not limited herein.

In a possible implementation of the implementation example B, the method further includes: The terminal device discards decoding soft information of the M-K first TBs other than the K first TBs in the M first TBs. Specifically, when the quantity K of retransmitted TBs included in the second data received by the terminal device is less than the quantity M of TBs received incorrectly, as indicated in the first information by the terminal device, the M-K first TBs other than the K first TBs in the M first TBs may not be retransmitted and decoded in a soft combining decoding manner. Therefore, the terminal device may discard (or confirm to discard) the decoding soft information of the M-K first TBs other than the K first TBs in the M first TBs, so that consumption of buffer space of the terminal device can be reduced, and power consumption overhead of the terminal device can be reduced.

In a possible implementation, the second data received by the terminal device in step S403 further includes Q fourth TBs, the Q fourth TBs are different from the K second TBs, and Q is a positive integer. Specifically, in addition to the retransmissions of the K first TBs (namely, the K second TBs), the second data may further include the Q fourth TBs different from the second TBs. In this way, when the network device can carry the retransmitted K second TBs in the second data in the first process, the network device can further carry another newly transmitted TB in the second data, so that data transmission in the first process can be fully utilized, and a transmission delay can be reduced.

In a possible implementation, the first information is carried on a physical uplink control channel (physical uplink control uplink channel, PUCCH), and a time domain position (for example, a slot position) X of the PUCCH satisfies: $X = n + k + {K}_{offset} ∗ {2}^{u - {u}_{{K}_{offset}}} ,$ where
n represents a slot index of a PUCCH slot that overlaps a slot in which a last TB in time domain in the N first TBs is located, k represents a scheduling timing parameter indicated by physical downlink shared channel to hybrid automatic repeat request feedback (physical downlink shared uplink channel to hybrid automatic repeat request feedback, PDSCH-to-HARQ_feedback) signaling, K_{offset} represents a scheduling offset, µ is a subcarrier spacing for PUCCH transmission, and u_{K_{offset}} is a subcarrier spacing configuration of K_{offset}.

Specifically, a transmission resource for the first information sent by the terminal device may be determined in the foregoing manner, so that the network device can receive the first information on the PUCCH in the foregoing manner.

Based on FIG. 4 and the related technical solutions, the first data received by the terminal device in step S401 includes the N first TBs, and N is greater than 1. Then, the first information sent by the terminal device in step S402 indicates that the M first TBs in the N first TBs are received incorrectly. Subsequently, in step S404, the terminal device may perform soft combining decoding on the K first TBs based on the K second TBs included in the second data in the same process. In other words, when a quantity of first TBs included in data sent by the network device is greater than 1, the terminal device may indicate, by using the first information, that the M first TBs in the N first TBs are received incorrectly. Subsequently, the network device may retransmit a part or all of TBs in the M first TBs. Therefore, the network device can retransmit, based on the first information sent by the terminal device, the part or all of TBs in the M first TBs that are received incorrectly, to restore the data.

In addition, the K second TBs included in the second data received by the terminal device in step S403 are the retransmissions of the K first TBs in the M first TBs that are received incorrectly. The terminal device performs soft combining decoding based on the K first TBs that are received incorrectly and buffered and the K second TBs that are retransmitted. Therefore, the terminal device can fully use a buffered resource to restore the data, thereby improving a success rate and reliability of retransmitting and decoding, and further improving communication efficiency.

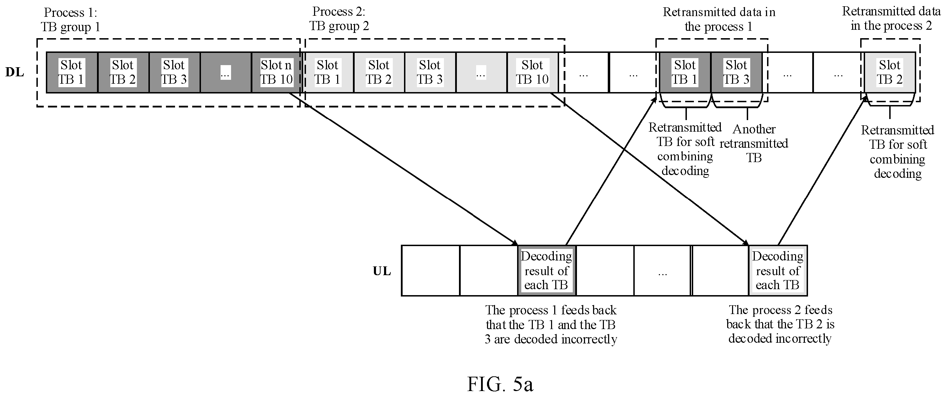

FIG. 5a is an application embodiment of the technical solution shown in FIG. 4. In FIG. 5a, an example in which retransmitted data of the network device includes a TB used for soft combining and another TB that is received incorrectly is used. In other words, in addition to the K second TBs, the second data sent by the network device in step S402 further includes the M-K third TBs.

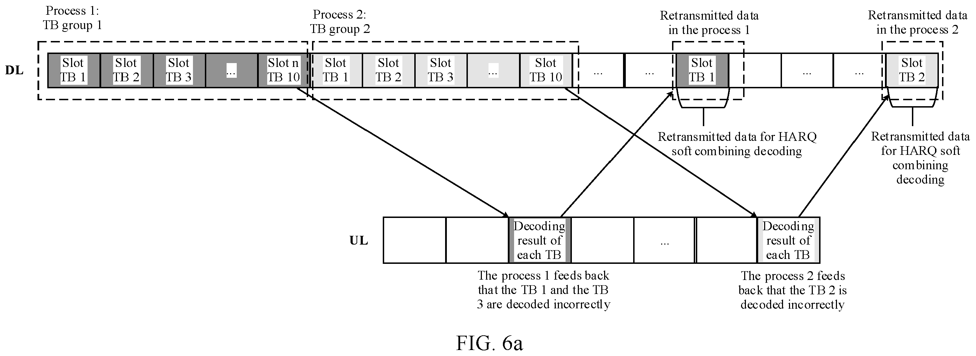

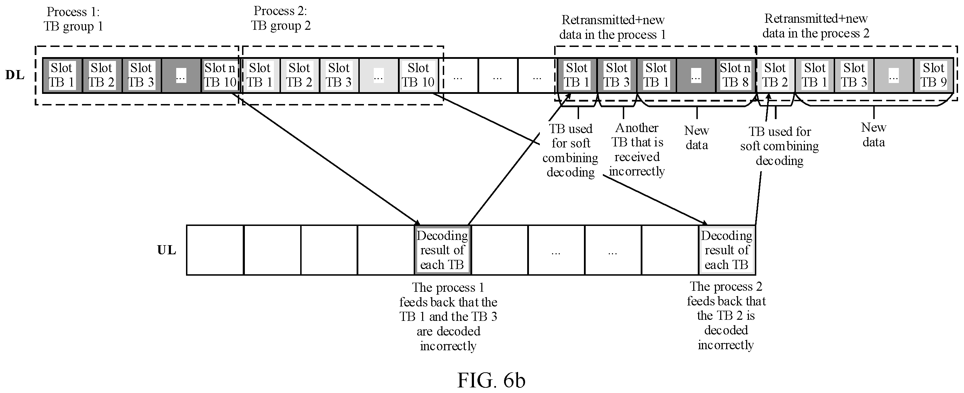

It should be understood that, in the examples shown in FIG. 5a, FIG. 6a, and FIG. 6b, an example in which different TBs occupy different time domain resources is used. In other words, different TBs may be transmitted in different slots (slots). However, in actual application, different TBs may be transmitted in a plurality of different manners such as time division, frequency division, or code division. The time division manner herein is merely an implementation example.

In FIG. 5a, it is assumed that a round-trip time is 40 ms, an SCS is equal to 120 kHz, and a TB group corresponding to a process includes x=10 TBs. A quantity n of TBs supporting retransmission soft combining in the TB group in the process is equal to 1. The network device determines, based on the round-trip time, a quantity of TBs in the TB group corresponding to the process. For example, a window length is quantized based on a slot length. If the quantity of TBs in the TB group is equal to $\left⌈RTT/max_process_num/slot_duration\right⌉$ slot lengths, a quantity of max_process_num threads meets a length of the round-trip time. Herein, max_process_num represents a supported quantity of processes, and slot_duration represents a slot length.

In an implementation example, when a process 1 in FIG. 5a is the first process in FIG. 4, data transmitted in the process 1 may be a TB group 1. For example, a quantity of TBs in the TB group 1 is 10 (that is, a value of N is 10), and the network device may indicate that a quantity of TBs on which soft combining processing is performed in the process is 1 (that is, a value of P is 1). In this example, after the terminal device receives the 10 TBs (that is, the first data received by the terminal device in step S401 includes a TB 1 to a TB 10) in the TB group 1 on a downlink (downlink, DL), the terminal device determines that the TB 1 and the TB 3 are received incorrectly and other TBs are received successfully. Correspondingly, the terminal device may feed back, on an uplink (uplink, UL), that the TB 1 and the TB 3 are received incorrectly (that is, the first information sent by the terminal device in step S402 indicates that the TB 1 and the TB 3 are received incorrectly), and the network device may carry all retransmitted TBs in the process 1, including the retransmitted TB 1 and the retransmitted TB 3 (that is, the second data received by the terminal device in step S403 includes the TB 1 and the TB 3). The retransmitted TB 1 is a TB used for soft combining decoding (that is, the terminal device performs soft combining decoding in step S404 based on the retransmitted TB 1 and the TB 1 transmitted last time), and the retransmitted TB 3 is another retransmitted TB, for example, is decoded as newly transmitted data.

In another implementation example, when a process 2 in FIG. 5a is the first process in FIG. 4, data transmitted in the process 2 may be a TB group 2. For example, a quantity of TBs in the TB group 2 is 10 (that is, a value of N is 10), and the network device may indicate that a quantity of TBs on which soft combining processing is performed in the process is 1 (that is, a value of P is 1). In this example, after the terminal device receives the 10 TBs (that is, the first data received by the terminal device in step S401 includes a TB 1 to a TB 10) in the TB group 1 on a downlink (downlink, DL), the terminal device determines that the TB 2 is received incorrectly and other TBs are received successfully. Correspondingly, the terminal device may feed back, on an uplink (uplink, UL), that the TB 2 is received incorrectly (that is, the first information sent by the terminal device in step S402 indicates that the TB 2 is received incorrectly), and the network device may carry all retransmitted TBs in the process 1, including the retransmitted TB 2 (that is, the second data received by the terminal device in step S403 includes the TB 2). The retransmitted TB 2 is a TB used for soft combining decoding (that is, the terminal device performs soft combining decoding in step S404 based on the retransmitted TB 2 and the TB 2 transmitted last time).

Optionally, the network device may reuse new data indication (new data indication, NDI) signaling to indicate whether the data transmitted in the process is data of a new TB group or a retransmitted TB group (indicated by NDI flipping). If the data is the retransmitted TB group, the first min (M, P) TBs support soft combining decoding. For example, an NDI may indicate that the TB group is retransmitted, and the first min (M, P) TBs support soft combining decoding.

Optionally, the network device may reuse RV signaling to indicate a redundancy version of TB data that supports HARQ soft combining retransmission and that is in a TB group.

Optionally, the network device may indicate, by using a control channel, a quantity (namely, a quantity K) of TBs that are used for soft combining and that are included in the retransmitted TB group.

In addition, based on the implementation example shown in FIG. 5a, spectral efficiency of a retransmission solution of a TB group based on a process window is simulated.

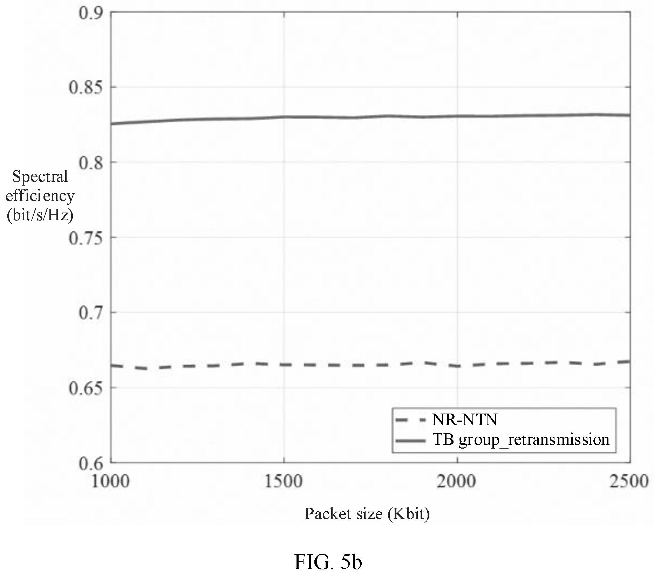

A simulation result is shown in FIG. 5b. It can be learned that, compared with an NR-NTN solution, the solution (namely, TB group retransmission (TB group_retransmission) in FIG. 5b) proposed in this application can improve spectral efficiency by 25%.

It can be learned from the implementation example shown in FIG. 5a that the retransmitted TB group includes all TBs that are decoded incorrectly and that are reported by UE. It may be agreed that a sequence of retransmitted TBs in the retransmitted TB group is consistent with a sequence of TBs that are decoded incorrectly and that are reported by the terminal device. In addition, the first min (M, P) (that is, a smaller value between M and P, and for definitions of M and P, refer to the foregoing description) TBs in the retransmitted TB group are used for soft combining decoding. In addition, in the TB group corresponding to each process, the first min (M, P) TBs that are decoded incorrectly are retransmitted in a soft combining decoding manner, so that a buffer resource can be fully used, and retransmission reliability can be improved. In addition, in a large-delay scenario, this solution supports physical layer/MAC layer retransmission, and has higher spectral efficiency than the NR-NTN. In addition, in a large-delay scenario, this solution has a lower delay than the NR-NTNT.

FIG. 6a is another application embodiment of the technical solution shown in FIG. 4. In FIG. 6a, an example in which retransmitted data of the network device includes a TB used for soft combining, but does not include another TB that is received incorrectly is used. In other words, the second data sent by the network device in step S402 includes the K second TBs, but does not include the M-K third TBs.

In an implementation example, when a process 1 in FIG. 6a is the first process in FIG. 4, compared with the implementation process shown in FIG. 5a, a difference lies in that retransmitted data in the process 1 includes a TB 1 used for soft combining decoding, but does not include a TB 3 that is received incorrectly. The TB 3 that is received incorrectly may be transmitted in a next process 1, or may be transmitted in another process. This is not limited herein.

In another implementation example, when a process 2 in FIG. 6a is the first process in FIG. 4, compared with the implementation process shown in FIG. 5a, because a quantity of TBs that are received incorrectly in the process 2 is 1, and another TB that is received incorrectly is not included, retransmitted data in the process 2 is the same as that in the implementation process shown in FIG. 5a.

It should be understood that, for the implementation process in FIG. 6a, refer to the foregoing FIG. 5a and related descriptions.

Optionally, the network device indicates, by using an NDI, whether the data transmitted in the process is data of a new TB group or a retransmitted TB group (indicated by NDI flipping). If the data is the retransmitted TB group, min (M, P) TBs support soft combining decoding.

Optionally, the network device indicates, by using one piece of RV signaling, redundancy versions of K TBs that are used for soft combining decoding and that are in the TB group (that is, the K second TBs are retransmitted by using a same RV version). Alternatively, optionally, the network device separately indicates, by using K pieces of RV signaling, redundancy versions of K TBs (namely, the K second TBs) used for soft combining decoding.

Optionally, the network device indicates, by using a control channel, a quantity of TBs that are used for soft combining decoding and that are included in the retransmitted TB group.

Based on the implementation example shown in FIG. 6a, the retransmitted TB group includes retransmitted TBs of which a quantity does not exceed a quantity of TBs that are supported by a single process and that are used for soft combining, that is, includes only TBs retransmitted in a soft combining manner. In addition, it is agreed that a sequence of retransmitted TBs in the retransmitted TB group is consistent with a sequence of TBs that are decoded incorrectly and that are reported by UE. In addition, the retransmitted TB group is limited to include a TB used for soft combining decoding, thereby providing retransmission flexibility for retransmission of another TB that is received incorrectly (for example, the TB 3 that is received incorrectly in the foregoing process 1). In other words, the another TB that is received incorrectly may be sent in any other TB group.

FIG. 6b is another application embodiment of the technical solution shown in FIG. 4. In FIG. 6b, an example in which retransmitted data of the network device includes a TB used for soft combining, another TB that is received incorrectly, and a newly transmitted TB is used. In other words, in addition to the K second TBs and the M-K third TBs (if the M-K third TBs exist), the second data sent by the network device in step S402 may further include Q fourth TBs.

In an implementation example, when a process 1 in FIG. 6b is the first process in FIG. 4, compared with the implementation process shown in FIG. 5a, a difference lies in that retransmitted data in the process 1 includes a TB 1 used for soft combining decoding and a TB 3 that is received incorrectly, and further includes other new data, for example, TBs included in "new data" in "retransmitted+new data in the process 1" in FIG. 6b, namely, the TB 1 to a TB 8.

In another implementation example, when a process 2 in FIG. 6b is the first process in FIG. 4, compared with the implementation process shown in FIG. 5a, a difference lies in that retransmitted data in the process 2 includes a TB 1 used for soft combining decoding and further includes other new data, for example, TBs included in "new data" in "retransmitted+new data in the process 2" in FIG. 6b, namely, the TB 1 to a TB 9.

It should be understood that, for the implementation process in FIG. 6b, refer to the foregoing FIG. 5a and related descriptions.

Optionally, the network device may include signaling on a control channel to indicate TBs that support soft combining retransmission and that are in a TB group of a process (for example, each TB supporting soft combining corresponds to one NDI, namely, K NDIs).

Optionally, the network device and the terminal device may agree that the first min (M, P) TBs in a retransmitted TB group in a process support soft combining (for example, each TB supporting soft combining corresponds to one NDI, namely, K NDIs).

Optionally, the network device may separately indicate, by including K pieces of NDI signaling on a control channel, that K pieces of TB data that are used for soft combining decoding and that are in a TB group are retransmitted data or new data (by flipping the NDI). In addition, the NDI indicates whether data of the TB group is all new data, or indicates that there is no data TB that requires soft combining in the TB group, and the TB group is decoded in a normal decoding manner or is decoded as new data. That two transmissions have a same NDI represents that a TB supporting soft combining is transmitted in the TB group.

Optionally, the network device may separately indicate, by including K pieces of RV signaling on a control channel, redundancy versions of K TBs that are used for soft combining decoding and that are in the TB group.

Based on the implementation example shown in FIG. 6b, the retransmitted TB group includes retransmitted data and new data, so that data transmission of a TB group in a process can be fully utilized, thereby reducing a delay of transmitting large-packet data.

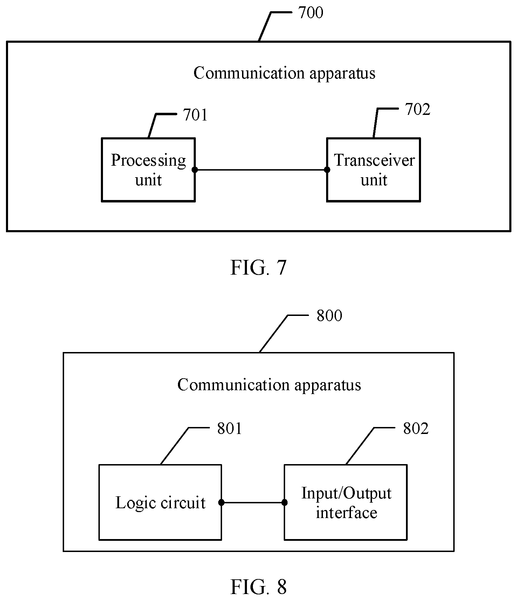

Refer to FIG. 7. An embodiment of this application provides a communication apparatus 700. The communication apparatus 700 may implement a function of the communication apparatus (the communication apparatus is a terminal device or a network device) in the foregoing method embodiments, and therefore can also implement beneficial effect of the foregoing method embodiments. In this embodiment of this application, the communication apparatus 700 may be a communication apparatus, or may be an integrated circuit, an element, or the like in the communication apparatus, for example, a chip.

In a possible implementation, when the apparatus 700 is configured to perform the method performed by the terminal device in FIG. 4 and related embodiments, the apparatus 700 includes a processing unit 701 and a transceiver unit 702. The transceiver unit 702 is configured to receive first data in a first process, where the first data includes N first transport blocks TBs, and N is an integer greater than 1. The transceiver unit 702 is further configured to send first information, where the first information indicates that M first TBs are received incorrectly, the M first TBs are included in the N first TBs, and M is a positive integer less than or equal to N. The transceiver unit is further configured to receive second data in the first process, where the second data includes K second TBs, and the K second TBs are retransmissions of K first TBs in the M first TBs, where K is less than or equal to M. The processing unit 701 is configured to perform soft combining decoding based on the K first TBs and the K second TBs.

In a possible implementation, when the apparatus 700 is configured to perform the method performed by the network device in FIG. 4 and related embodiments, the apparatus 700 includes a processing unit 701 and a transceiver unit 702. The transceiver unit 702 is configured to send first data in a first process, where the first data includes N first transport blocks TBs, and N is an integer greater than 1. The transceiver unit 702 is further configured to receive first information. The processing unit 701 is configured to determine, based on the first information, that M first TBs are received incorrectly, where the M first TBs are included in the N first TBs, and M is a positive integer less than or equal to N. The transceiver unit 702 is further configured to send second data in the first process, where the second data includes K second TBs, and the K second TBs are retransmissions of K first TBs in the M first TBs, where K is less than or equal to M. The K first TBs and the K second TBs are used for soft combining decoding.

It should be noted that for details of content like an information execution process of the unit of the communication apparatus 700, refer to descriptions in the foregoing method embodiments of this application. Details are not described herein again.

FIG. 8 is a diagram of another structure of a communication apparatus 800 according to this application. The communication apparatus 800 includes a logic circuit 801 and an input/output interface 802. The communication apparatus 800 may be a chip or an integrated circuit.

The transceiver unit 702 shown in FIG. 7 may be a communication interface, the communication interface may be the input/output interface 802 in FIG. 8, and the input/output interface 802 may include an input interface and an output interface. Alternatively, the communication interface may be a transceiver circuit, and the transceiver circuit may include an input interface circuit and an output interface circuit.

Optionally, the input/output interface 802 is configured to receive first data in a first process, where the first data includes N first transport blocks TBs, and N is an integer greater than 1. The input/output interface 802 is further configured to send first information, where the first information indicates that M first TBs are received incorrectly, the M first TBs are included in the N first TBs, and M is a positive integer less than or equal to N. The input/output interface 802 is further configured to receive second data in the first process, where the second data includes K second TBs, and the K second TBs are retransmissions of K first TBs in the M first TBs, where K is less than or equal to M. The logic circuit 801 is configured to perform soft combining decoding based on the K first TBs and the K second TBs.

Optionally, the input/output interface 802 is configured to send first data in a first process, where the first data includes N first transport blocks TBs, and N is an integer greater than 1. The input/output interface 802 is further configured to receive first information. The logic circuit 801 is configured to determine, based on the first information, that M first TBs are received incorrectly, where the M first TBs are included in the N first TBs, and M is a positive integer less than or equal to N. The input/output interface 802 is further configured to send second data in the first process, where the second data includes K second TBs, and the K second TBs are retransmissions of K first TBs in the M first TBs, where K is less than or equal to M. The K first TBs and the K second TBs are used for soft combining decoding.

The logic circuit 801 and the input/output interface 802 may further perform another step performed by the terminal device or the network device in any embodiment, and implement corresponding beneficial effect. Details are not described herein again.

In a possible implementation, the processing unit 701 shown in FIG. 7 may be the logic circuit 801 in FIG. 8.

Optionally, the logic circuit 801 may be a processing apparatus, and a part or all of functions of the processing apparatus may be implemented by using software. A part or all of functions of the processing apparatus may be implemented by using software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field programmable gate arrays (field programmable gate arrays, FPGAs), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable logic device (programmable logic device, PLD), or another integrated chip, or any combination of the foregoing chips or processors.

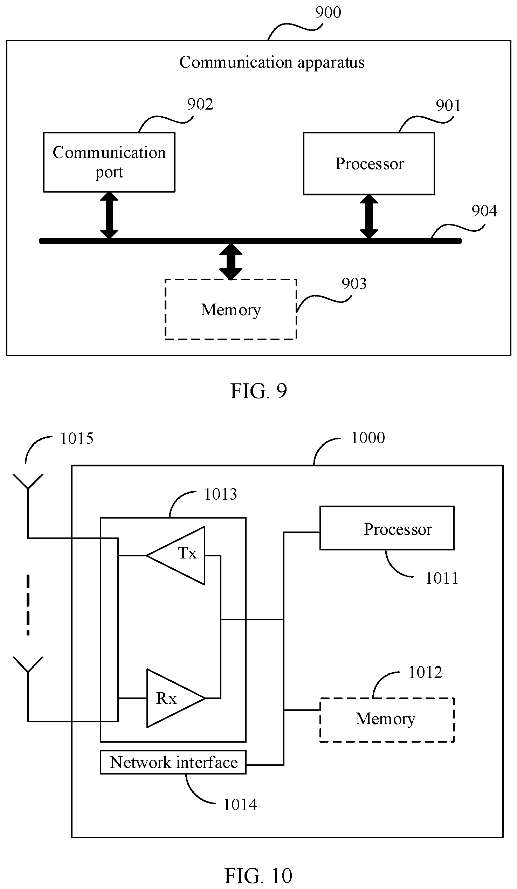

FIG. 9 shows a communication apparatus 900 in the foregoing embodiments according to an embodiment of this application. The communication apparatus 900 may be specifically the communication apparatus used as the terminal device in the foregoing embodiments.

In a diagram of a possible logical structure of the communication apparatus 900, the communication apparatus 900 may include but is not limited to at least one processor 901 and a communication port 902.

The transceiver unit 702 shown in FIG. 7 may be a communication interface, the communication interface may be the communication port 902 in FIG. 9, and the communication port 902 may include an input interface and an output interface. Alternatively, the communication port 902 may be a transceiver circuit, and the transceiver circuit may include an input interface circuit and an output interface circuit.

Further, optionally, the apparatus may include at least one of a memory 903 and a bus 904. In this embodiment of this application, the at least one processor 901 is configured to perform control processing on an action of the communication apparatus 900.

In addition, the processor 901 may be a central processing unit, a general-purpose processor, a digital signal processor, an application-specific integrated circuit, a field programmable gate array or another programmable logic device, a transistor logic device, a hardware component, or any combination thereof. The processor 901 may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

It should be noted that the communication apparatus 900 shown in FIG. 9 may be specifically configured to implement a step implemented by the terminal device in the foregoing method embodiments, and achieve the technical effect corresponding to the terminal device. For a specific implementation of the communication apparatus shown in FIG. 9, refer to the descriptions in the foregoing method embodiments. Details are not described herein again.

FIG. 10 is a diagram of a structure of a communication apparatus 1000 in the foregoing embodiments according to an embodiment of this application. The communication apparatus 1000 may be specifically a communication apparatus used as the network device in the foregoing embodiments. For a structure of the communication apparatus, refer to the structure shown in FIG. 10.

The communication apparatus 1000 includes at least one processor 1011 and at least one network interface 1014. Further, optionally, the communication apparatus further includes at least one memory 1012, at least one transceiver 1013, and one or more antennas 1015. The processor 1011, the memory 1012, the transceiver 1013, and the network interface 1014 are connected to each other, for example, through a bus. In this embodiment of this application, the connection may include various interfaces, transmission lines, buses, or the like. This is not limited in this embodiment. The antenna 1015 is connected to the transceiver 1013. The network interface 1014 is configured to enable the communication apparatus to communicate with another communication device through a communication link. For example, the network interface 1014 may include a network interface between the communication apparatus and a core network device, for example, an S1 interface. The network interface may include a network interface between the communication apparatus and another communication apparatus (for example, another network device or core network device), for example, an X2 or Xn interface.

The transceiver unit 702 shown in FIG. 7 may be a communication interface, the communication interface may be the network interface 1014 in FIG. 10, and the network interface 1014 may include an input interface and an output interface. Alternatively, the network interface 1014 may be a transceiver circuit, and the transceiver circuit may include an input interface circuit and an output interface circuit.

The processor 1011 is mainly configured to: process a communication protocol and communication data; and control the entire communication apparatus, execute a software program, and process data of the software program, for example, is configured to support the communication apparatus in performing actions described in embodiments. The communication apparatus may include a baseband processor and a central processing unit. The baseband processor is mainly configured to process the communication protocol and the communication data. The central processing unit is mainly configured to: control an entire terminal device, execute the software program, and process the data of the software program. Functions of the baseband processor and the central processing unit may be integrated into the processor 1011 in FIG. 10. A person skilled in the art may understand that the baseband processor and the central processing unit each may be an independent processor, and are interconnected by using a technology such as a bus. A person skilled in the art may understand that the terminal device may include a plurality of baseband processors to adapt to different network standards, the terminal device may include a plurality of central processing units to enhance a processing capability of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and the data. The memory 1012 may be independent, and connected to the processor 1011. Optionally, the memory 1012 and the processor 1011 may be integrated together, for example, integrated in a chip. The memory 1012 can store program code for executing the technical solutions in embodiments of this application, and execution of the program code is controlled by the processor 1011. Various types of computer program code executed may also be considered as a driver of the processor 1011.

FIG. 10 shows only one memory and one processor. In an actual terminal device, there may be a plurality of processors and a plurality of memories. The memory may also be referred to as a storage medium, a storage device, or the like. The memory may be a storage element on a same chip as the processor, namely, an on-chip storage element, or may be an independent storage element. This is not limited in embodiments of this application.

The transceiver 1013 may be configured to support receiving or sending of a radio frequency signal between the communication apparatus and a terminal, and the transceiver 1013 may be connected to the antenna 1015. The transceiver 1013 includes a transmitter Tx and a receiver Rx. Specifically, the one or more antennas 1015 may receive a radio frequency signal. The receiver Rx of the transceiver 1013 is configured to: receive the radio frequency signal from the antenna, convert the radio frequency signal into a digital baseband signal or a digital intermediate frequency signal, and provide the digital baseband signal or the digital intermediate frequency signal for the processor 1011, so that the processor 1011 further processes, for example, performs demodulation processing and decoding processing on, the digital baseband signal or the digital intermediate frequency signal. In addition, the transmitter Tx of the transceiver 1013 is further configured to: receive a modulated digital baseband signal or digital intermediate frequency signal from the processor 1011, convert the modulated digital baseband signal or digital intermediate frequency signal into a radio frequency signal, and send the radio frequency signal through the one or more antennas 1015. Specifically, the receiver Rx may selectively perform one-level or multi-level down mixing processing and analog-to-digital conversion processing on the radio frequency signal, to obtain the digital baseband signal or the digital intermediate frequency signal. A sequence of the down mixing processing and the analog-to-digital conversion processing may be adjusted. The transmitter Tx may selectively perform one-level or multi-level up mixing processing and digital-to-analog conversion processing on the modulated digital baseband signal or digital intermediate frequency signal, to obtain the radio frequency signal. A sequence of the up mixing processing and the digital-to-analog conversion processing may be adjusted. The digital baseband signal and the digital intermediate frequency signal may be collectively referred to as a digital signal.

The transceiver 1013 may also be referred to as a transceiver unit, a transceiver device, a transceiver apparatus, or the like. Optionally, a component that is in the transceiver unit and that is configured to implement a receiving function may be considered as a receiving unit, and a component that is in the transceiver unit and that is configured to implement a sending function may be considered as a sending unit. In other words, the transceiver unit includes the receiving unit and the sending unit. The receiving unit may also be referred to as a receiver, an input interface, a receiver circuit, or the like. The sending unit may be referred to as a transmitter, a transmitting device, a transmitter circuit, or the like.

It should be noted that the communication apparatus 1000 shown in FIG. 10 may be specifically configured to implement a step implemented by the network device in the foregoing method embodiments, and achieve the technical effect corresponding to the network device. For a specific implementation of the communication apparatus 1000 shown in FIG. 10, refer to the descriptions in the foregoing method embodiments. Details are not described herein again.

An embodiment of this application further provides a computer-readable storage medium. The storage medium is configured to store one or more computer-executable instructions. When the computer-executable instructions are executed by a processor, the processor performs the method according to the possible implementations of the terminal device or the network device in the foregoing embodiments.

An embodiment of this application further provides a computer program product (or referred to as a computer program). When the computer program product is executed by a processor, the processor performs the method according to the possible implementations of the terminal device or the network device.

An embodiment of this application further provides a chip system. The chip system includes at least one processor, configured to support a communication apparatus in implementing a function in the foregoing possible implementations of the communication apparatus. Optionally, the chip system further includes an interface circuit, where the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete device. The communication apparatus may be specifically the terminal device or the network device in the foregoing method embodiments.

An embodiment of this application further provides a communication system. The communication system includes the terminal device and the network device in any one of the foregoing embodiments.

In the several embodiments provided in this application, it should be understood that the disclosed system, apparatus, and method may be implemented in other manners. For example, the apparatus embodiments described above are merely examples. For example, division into the units is merely logical function division, and there may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one location, or may be distributed on a plurality of network units. A part or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit.

When the communication apparatus is a chip used in a terminal, the chip in the terminal implements a function of the terminal in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent to the base station by these modules.

When the communication apparatus is a chip used in a base station, the chip in the base station implements a function of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent to the terminal by these modules.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in a base station or a terminal. Certainly, the processor and the storage medium may alternatively exist in a base station or terminal as discrete components.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or a part of the procedures or functions in embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logical conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving first data in a first process, wherein the first data comprises N first transport blocks TBs, and N is an integer greater than 1;
sending first information, wherein the first information indicates that M first TBs are received incorrectly, the M first TBs are comprised in the N first TBs, and M is a positive integer less than or equal to N;
receiving second data in the first process, wherein the second data comprises K second TBs, and the K second TBs are retransmissions of K first TBs in the M first TBs, wherein K is less than or equal to M; and
performing soft combining decoding based on the K first TBs and the K second TBs.

2. The method according to claim 1, wherein the method further comprises:
receiving second information, wherein the second information indicates that a quantity of TBs on which a terminal device performs soft combining processing in the first process is P, and K is less than or equal to P.

3. The method according to claim 2, wherein before receiving the second information, the method further comprises:
sending third information, wherein the third information indicates a quantity of TBs supported by the terminal device for soft combining processing in the first process.

4. The method according to claim 1, wherein the method further comprises:
receiving fourth information, wherein the fourth information indicates that quantities of TBs on which a terminal device performs soft combining processing in at least two processes are all P, and the at least two processes comprise the first process.

5. The method according to claim 4, wherein before receiving second information, the method further comprises:
sending fifth information, wherein the fifth information indicates quantities of TBs supported by the terminal device for soft combining processing in the at least two processes.

6. The method according to any one of claims 2 to 5, wherein when M is less than or equal to P, K is equal to M.

7. The method according to any one of claims 2 to 5, wherein when M is greater than P, K is equal to P and K is less than M.

8. The method according to claim 7, wherein the second data further comprises M-K third TBs, and the M-K third TBs are retransmissions of M-K first TBs other than the K first TBs in the M first TBs.

9. The method according to claim 7, wherein the method further comprises:
receiving third data, wherein the third data comprises M-K third TBs, and the M-K third TBs are retransmissions of the M-K first TBs.

10. The method according to any one of claims 1 to 9, wherein the second data further comprises Q fourth TBs, the Q fourth TBs are different from the K second TBs, and Q is a positive integer.

11. The method according to any one of claims 1 to 10, wherein the first information comprises any one of the following:
N bits, wherein the N bits respectively indicate whether the N first TBs are received successfully or incorrectly;
indexes of the M first TBs; and
indexes of the K first TBs and a value M-K.

12. The method according to any one of claims 1 to 11, wherein
the K first TBs are K TBs with a smaller index value in one or more TBs that are received incorrectly and that are in the M first TBs;
the K first TBs are K TBs with a larger index value in one or more TBs that are received incorrectly and that are in the M first TBs; or
indexes of the K first TBs in the M first TBs are preconfigured or dynamically configured.

13. The method according to any one of claims 1 to 12, wherein
before receiving the first data, the method further comprises:
receiving indication information indicating a redundancy version of the first data; and
before receiving the second data, the method further comprises:
receiving indication information indicating a redundancy version of the second data.

14. The method according to any one of claims 1 to 12, wherein
before receiving the first data, the method further comprises:
receiving indication information indicating redundancy versions corresponding to the N first TBs; and
before receiving the second data, the method further comprises:
receiving indication information indicating redundancy versions corresponding to the K second TBs, wherein redundancy versions corresponding to the K first TBs in the N first TBs are different from the redundancy versions corresponding to the K second TBs.

15. The method according to any one of claims 1 to 14, wherein the method further comprises:
receiving indication information indicating that the K second TBs in the second data are used for soft combining decoding.

16. The method according to any one of claims 1 to 15, wherein the method further comprises:
receiving indication information indicating that a quantity of retransmitted TBs that are used for soft combining decoding and that are comprised in the second data is K.

17. The method according to any one of claims 1 to 16, wherein the method further comprises:
receiving sixth information, wherein the sixth information indicates that a quantity of TBs in the first process is N.

18. The method according to any one of claims 1 to 16, wherein the method further comprises:
receiving seventh information, wherein the seventh information indicates that quantities of TBs in at least two processes are all N, and the at least two processes comprise the first process.

19. The method according to any one of claims 1 to 18, wherein the first information is carried on a physical uplink control channel PUCCH, and a time domain position X of the PUCCH satisfies: $X = n + k + {K}_{offset} ∗ {2}^{u - {u}_{{K}_{offset}}} ,$ wherein
n represents a slot index of a PUCCH slot that overlaps a slot in which a last TB in the time domain in the N first TBs is located, k represents a scheduling timing parameter indicated by physical downlink shared channel to hybrid automatic repeat request feedback (PDSCH-to-HARQ_feedback) signaling, K_{offset} represents a scheduling offset, µ is a subcarrier spacing for PUCCH transmission, and u_{K_{offset}} is a subcarrier spacing configuration of K_{offset}.

20. A communication method, comprising:
sending first data in a first process, wherein the first data comprises N first transport blocks TBs, and N is an integer greater than 1;
receiving first information, wherein the first information indicates that M first TBs are received incorrectly, the M first TBs are comprised in the N first TBs, and M is a positive integer less than or equal to N; and
sending second data in the first process, wherein the second data comprises K second TBs, and the K second TBs are retransmissions of K first TBs in the M first TBs, wherein K is less than or equal to M, and the K first TBs and the K second TBs are used for soft combining decoding.

21. The method according to claim 20, wherein the method further comprises:
sending second information, wherein the second information indicates that a quantity of TBs on which a terminal device performs soft combining processing in the first process is P, and K is less than or equal to P.

22. The method according to claim 21, wherein before sending the second information, the method further comprises:
receiving third information, wherein the third information indicates a quantity of TBs supported by the terminal device for soft combining processing in the first process.

23. The method according to claim 20, wherein the method further comprises:
sending fourth information, wherein the fourth information indicates that quantities of TBs on which a terminal device performs soft combining processing in at least two processes are all P, and the at least two processes comprise the first process.

24. The method according to claim 23, wherein before receiving second information, the method further comprises:
receiving fifth information, wherein the fifth information indicates quantities of TBs supported by the terminal device for soft combining processing in the at least two processes.

25. The method according to any one of claims 21 to 24, wherein when M is less than or equal to P, K is equal to M.

26. The method according to any one of claims 21 to 24, wherein when M is greater than P, K is equal to P and K is less than M.

27. The method according to claim 26, wherein the second data further comprises M-K third TBs, and the M-K third TBs are retransmissions of M-K first TBs other than the K first TBs in the M first TBs.

28. The method according to claim 26, wherein the method further comprises:
sending third data, wherein the third data comprises M-K third TBs, and the M-K third TBs are retransmissions of the M-K first TBs.

29. The method according to any one of claims 20 to 28, wherein the second data further comprises Q fourth TBs, the Q fourth TBs are different from the K second TBs, and Q is a positive integer.

30. The method according to any one of claims 20 to 29, wherein the first information comprises any one of the following:
N bits, wherein the N bits respectively indicate whether the N first TBs are received successfully or incorrectly;
indexes of the M first TBs; and
indexes of the K first TBs and a value M-K.

31. The method according to any one of claims 20 to 30, wherein
the K first TBs are K TBs with a smaller index value in one or more TBs that are received incorrectly and that are in the M first TBs;
the K first TBs are K TBs with a larger index value in one or more TBs that are received incorrectly and that are in the M first TBs; or
indexes of the K first TBs in the M first TBs are preconfigured or dynamically configured.

32. The method according to any one of claims 20 to 31, wherein
before sending the first data, the method further comprises:
sending indication information indicating a redundancy version of the first data; and
before sending the second data, the method further comprises:
sending indication information indicating a redundancy version of the second data.

33. The method according to any one of claims 20 to 31, wherein
before sending the first data, the method further comprises:
sending indication information indicating redundancy versions corresponding to the N first TBs; and
before sending the second data, the method further comprises:
sending indication information indicating redundancy versions corresponding to the K second TBs, wherein redundancy versions corresponding to the K first TBs in the N first TBs are different from the redundancy versions corresponding to the K second TBs.

34. The method according to any one of claims 20 to 33, wherein the method further comprises:
sending indication information indicating that the K second TBs in the second data are used for soft combining decoding.

35. The method according to any one of claims 20 to 34, wherein the method further comprises:
sending indication information indicating that a quantity of retransmitted TBs that are used for soft combining decoding and that are comprised in the second data is K.

36. The method according to any one of claims 20 to 35, wherein the method further comprises:
sending sixth information, wherein the sixth information indicates that a quantity of TBs in the first process is N.

37. The method according to any one of claims 20 to 35, wherein the method further comprises:
sending seventh information, wherein the seventh information indicates that quantities of TBs in at least two processes are all N, and the at least two processes comprise the first process.

38. The method according to any one of claims 20 to 37, wherein the first information is carried on a physical uplink control channel PUCCH, and a time domain position X of the PUCCH satisfies: $X = n + k + {K}_{offset} ∗ {2}^{u - {u}_{{K}_{offset}}} ,$ wherein
n represents a slot index of a PUCCH slot that overlaps a slot in which a last TB in time domain in the N first TBs is located, k represents a scheduling timing parameter indicated by physical downlink shared channel to hybrid automatic repeat request feedback (PDSCH-to-HARQ_feedback) signaling, K_{offset} represents a scheduling offset, µ is a subcarrier spacing for PUCCH transmission, and u_{K_{offset}} is a subcarrier spacing configuration of K_{offset}.

39. A communication apparatus, comprising a module configured to perform the method according to any one of claims 1 to 38.

40. A communication apparatus, comprising at least one processor, wherein the at least one processor is coupled to a memory, and the at least one processor is configured to perform the method according to any one of claims 1 to 38.

41. A readable storage medium, wherein the storage medium stores a computer program or instructions, and when the computer program or the instructions are executed by a communication apparatus, the method according to any one of claims 1 to 38 is implemented.
